# EUROPEAN PATENT SPECIFICATION

(11) **EP 4 269 462 B1**
(45) Date of publication and mention of the grant of the patent: **28.01.2026**
(21) Application number: 22170043.8
(22) Date of filing: 26.04.2022
(51) Int. Cl.: C08G 18/12, C08G 18/32, C08G 18/48, C08G 18/66, C08G 18/76, C08L 23/06, C08L 33/08, C08L 33/12, C08L 63/00, C08L 75/08, C09J 133/08, C09J 133/10, C08F 20/06, C08F 283/00, C09J 133/02, C09J 151/08, C09J 4/06

(54) **TWO COMPONENT (2K) ACRYLIC COMPOSITION COMPRISING A THERMOPLASTIC POLYURETHANE**
ZWEIKOMPONENTEN (2K)-ACRYLZUSAMMENSETZUNG, DIE EIN THERMOPLASTISCHES POLYURETHAN UMFASST
COMPOSITION ACRYLIQUE À DEUX COMPOSANTS (2K) COMPRENANT UN POLYURÉTHANE THERMOPLASTIQUE

(43) Date of publication of application: 01.11.2023
(73) Proprietor: Henkel AG & Co. KGaA, 40589 Düsseldorf (DE)
(72) Inventor: Brandt, Adrian, 45219 Essen (DE); Sweeney, Nigel, Dublin, 6W (IE); Barnes, Rory, Dublin, K78 (IE); Besler, Alissa, 40591 Düsseldorf (DE); Angenvoort, Astrid, 40470 Düsseldorf (DE); Pasemann, Timo, 46047 Oberhausen (DE); Spiegelberg, Brian, 40627 Düsseldorf (DE)

(56) References cited:
- US-A1- 2008 039 582
- US-A1- 2012 077 929
- US-B2- 9 346 986

## Description

### FIELD OF THE INVENTION

The present invention is directed to a two component (2K) composition based on acrylic monomers, which composition may have utility an adhesive and which composition comprises a thermoplastic polyurethane having a significant bio-based carbon content.

### BACKGROUND TO THE INVENTION

Thermoplastic polyurethanes have found significant utility as functional ingredients in coating, adhesive and sealant compositions and in the preparation of composite materials. This applicability derives from the conventional properties of thermoplastic polyurethanes, including for instance: high abrasion resistance; low-temperature performance; high shear strength; high elasticity; transparency; and, oil and grease resistance.

As is known in the art, thermoplastic polyurethane is a binary system of soft and hard segments which is formulated of three raw ingredients: linear polyols, organic polyisocyanates; and short-chain diols. The soft phase, built out of the polyol, is dedicated to the flexibility and elastomeric character of the polyurethane. The hard phase, built up from an isocyanate and chain extender, provides a thermoplastic polyurethane with its stiffness and overall mechanical performance. The type and molecular weight of the polyol, the structure of the polyisocyanate, the structure of the chain extender and the ratio of soft to hard segments in the thermoplastic polyurethane are thus determinative of the physical properties thereof. The ability to tune the physical properties of the thermoplastic polyurethanes through the selection of chemical ingredients and the known advantages of thermoplastic processability contribute to the usefulness of said polyurethanes.

The ingredients used to make many known commercial polyurethane polymers are derived from fossil fuels and so are non-renewable materials. This is problematic given that there has, in recent years, been an elevated demand for the replacement of petroleum-derived polymeric materials with bio-renewable polymers. This demand is driven by the growing concern for the environment as well as forecasts for the shortage of crude oil and other fossil-based resources.

Clearly it would be desirable to manufacture thermoplastic polyurethanes using renewable compounds but a number of plant or animal derived materials are inapt as ingredients. For example, those natural oil based polyols which are facile to obtain - such as soy bean oil and castor oil - often possess a lower molecular weight than conventionally sourced polyol materials, such as fossil-derived polyether polyols: the use of such natural oil based polyols deleteriously impacts *inter alia* the glass transition temperature (Tg) of the polyurethane. Higher molecular weight natural oil based polyols are known but may often lead to insufficient elongation in the resulting thermoplastic polyurethane.

A need has therefore been recognized in the art to develop renewable ingredients for thermoplastic polyurethanes: the renewable ingredients should impart acceptable physical properties on the thermoplastic polyurethanes, thereby allowing the polyurethanes to be used in *inter alia* coatings, adhesives, sealants and composite materials. Whilst bio-based chain extenders - such as 1,2-propanediol - are known, a number of authors have focused on obtaining bio-based polyols which are to constitute the soft phase of the thermoplastic polyurethane.

US20140107311A1 (Farkas) discloses a thermoplastic polyurethane which is comprised of the reaction product of: (1) a hydroxyl terminated polyester intermediate having a number average molecular weight (Mn) of from 500 to 10000 Daltons; (2) a polyisocyanate; and, (3) a glycol chain extender. The hydroxyl terminated polyester intermediate is comprised of repeat units that are derived from a bio-based 1,3-propylene glycol component and a dicarboxylic acid.

US2020362092A1 (Schaefer et al.) discloses a thermoplastic polyurethane obtained by reacting: (i) at least one polyisocyanate; ii) at least one chain extender; and, iii) at least one polyol composition, wherein the polyol composition comprises at least one polyester polyol (P1) which is obtainable by reacting an aliphatic dicarboxylic acid having 2 to 12 carbon atoms and a mixture (M1) comprising propane-1,3-diol and a further diol (D1) having 2 to 12 carbon atoms.

WO01/72867A2 (Shell Internationale Research Maatschappij B.V.) discloses a thermoplastic polyurethane elastomer (TPU) composition which comprises: a) a poly(trimethylene carbonate) diol (PTMC diol) as the soft segment; b) a diisocyanate; and c) at least one glycol which reacts with the diisocyanate to form the hard segment which comprises from 10 to 55 wt.% of the composition, wherein the hard segment is defined as the sum portion of diisocyanate that reacts with the glycol plus the unreacted glycol.

US Patent No. 9,273,180 B2 (Narayan et al.) discloses a process for producing polyols which have utility in the preparation of polyurethanes, said process comprising: a) providing a biomass material comprising proteins; b) hydrolyzing said biomass material to amino acids; c) condensing said amino acids with a diamine to produce amine terminated monomers; and, d) reacting said monomers with a carbonate to provide hydroxyl terminated urethane oligomers.

CN110627985A (Beijing University of Chemical Technology) describes the preparation of a thermoplastic polyurethane from poly(lactic acid). The preparation comprises: i) dehydrating polylactic acid diol in a vacuum stirring and heating environment; ii) heating, adding a diisocyanate compound, a catalyst and a solvent into the dried polylactic acid, and carrying out stable copolymerization to obtain a prepolymer; and, iii) adding small molecular diol into the prepolymer, quickly stirring, taking out, curing in an oven, and removing the solvent to obtain the polylactic acid-based thermoplastic polyurethane elastomer.

WO2019164684A1 (Lubrizol Advanced Materials Inc.) provides a thermoplastic polyurethane comprising the reaction product of: a polyisocyanate; a chain extender comprising hydroquinone bis (2-hydroxyethyl) ether; and, a spiroglycol initiated polycaprolactone polyester polyol.

US 2012/077929 A1 and US 2008/039582 A1 disclose curable PU aqueous dispersions made from bio-based polyols.

The present inventors are concerned with further bio-based thermoplastic polyurethanes of which the physical properties enable it to be effectively incorporated into two component (2K) compositions based on acrylic monomers.

### STATEMENT OF THE INVENTION

The invention is defined by the appended claims. In a first aspect, the two component (2K) composition comprises, based on the weight of the composition:
a first component comprising:
from 10 to 80 wt.% of a) said at least one ethylenically unsaturated monomer; and, a second component comprising:
   from 0.1 to 10 wt.% of b) said at least one radical generating initiator, wherein said composition further comprises
   from 5 to 70 wt.% of c) said at least one thermoplastic polyurethane obtained from the reaction of:
      I) at least one polyether polyol having a weight average molecular weight of from 400 to 4000 g/mol., a polydispersity (PD) of less than 3 and a bio-based carbon content of at least 50%;
      II) at least one polyol having a molecular weight of less than 500 g/mol;
      III) optionally at least one further active hydrogen compound; and,
      IV) at least one polyisocyanate compound,
wherein in said reaction the molar ratio of the hydroxyl groups to NCO groups is at least 1:1 and preferably from 1:1 to 1.2:1.

Said at least one radical generating initiator, in preferred embodiments of the composition, comprises or consists of at least one radical generating redox initiator.

It is preferred in the present invention that said polyol (I) from which the thermoplastic polyurethane (c) is obtained is a polyoxy(C₂-C₄)alkylene having a weight average molecular weight of from 400 to 4000 g/mol, a polydispersity (PD) of less than 3 and a bio-based carbon content of at least 50%. A particular preference is acknowledged for said polyol (I) being a polytrimethylene ether glycol having a weight average molecular weight of from 400 to 4000 g/mol, a polydispersity (PD) of less than 3 and a bio-based carbon content of at least 90%.

Part a) of the first component preferably comprises, based on the weight of the composition, from 2 to 50 wt.% at least one ethylenically unsaturated acid monomer. In particular, said at least one ethylenically unsaturated acid monomer should be selected from the group consisting of: ethylenically unsaturated carboxylic acids; ethylenically unsaturated sulfonic acids; ethylenically unsaturated phosphoric acids; and, ethylenically unsaturated phosphonic acids. And a preference is acknowledged for the use in the composition of at least one ethylenically unsaturated acid monomer selected from the group consisting of: methacrylic acid; acrylic acid, itaconic acid; maleic acid; aconitic acid; crotonic acid; muconic acid; and, fumaric acid; mono-2-(methacryloyloxy)ethyl maleate; and, mono-2-methacryloyloxyethylsuccinate.

Part a) of the first component comprise, based on the weight of the composition, from 10 to 80 wt.% of at least one (meth)acrylate monomer represented by Formula M:

H₂C=CQCO₂R¹ (M)

wherein:
   Q is hydrogen, halogen or a C₁ alkyl group; and,
   R¹ is C₁-C₁₈ alkyl, C₁-C₁₈ hydroxyalkyl, C₃-C₁₈ cycloalkyl, C₃-C₅cycloalkylC₁-C₃alkyl, C₂-C₅heterocycloalkyl, C₂-C₅heterocycloalkylC₁-C₃alkyl, C₂-C₂₀ alkenyl, C₂-C₁₂ alkynyl, C₆-C₁₈ aryl, C₁-C₉ heteroaryl, C₁-C₉heteroarylC₁-C₃alkyl, C₇-C₁₈ alkaryl or C₇-C₁₈ aralkyl;
preferably wherein: R¹ is C₁-C₁₂ alkyl, C₁-C₁₂ hydroxyalkyl, C₃-C₁₂ cycloalkyl, C₃-C₅cycloalkylC₁-C₃alkyl, C₂-C₅heterocycloalkyl or C₂-C₅heterocycloalkylC₁-C₃alkyl.

Exemplary two component (2K) compositions may be characterized by comprising: at least one (meth)acrylate monomer represented by Formula (M) wherein R¹ is C₁-C₁₂ alkyl; and / or, at least one (meth)acrylate monomer represented by Formula (M) wherein R¹ is C₂-C₅heterocycloalkylC₁-C₃alkyl.

The presence of macromonomers in part a) of the first component is not precluded. The two component (2K) composition may thus be characterized by comprising a macro-monomer component consisting of one or more oligomers selected from the group consisting of: urethane (meth)acrylates, polyester (meth)acrylates; polyether (meth)acrylates; (meth)acrylate functionalized polymers and copolymers of dienes; and, (meth)acrylate functionalized hydrogenated polymers and copolymers of dienes.

The present invention also does not preclude that embodiment wherein part a) of the first component comprises, based on the weight of the composition, from 10 to 60 wt.% of at least one unsaturated lactone or lactam monomer. For example, the composition may comprise at least one α-exomethylene lactone monomer selected from the group consisting of: α-methylene-γ-butyrolactone; β-hydroxy-α-methylene-γ-butyrolactone; β-methyl-α-methylene-γ-butyrolactone; and, γ-methyl-α-methylene-γ-butyrolactone.

In accordance with a second aspect of the invention, there is provided a cured product obtained from the two component (2K) composition as defined hereinabove and in the appended claims. The present invention also encompasses the use of the cured reaction product as a coating, sealant or adhesive.

A further aspect of the invention provided a bonded structure comprising: a first substrate; and, a second substrate; wherein a cured two component (2K) composition as defined hereinabove and in the appended claims is disposed between the first and second substrates.

### DEFINITIONS

As used herein, the singular forms *"a", "an"* and *"the"* include plural referents unless the context clearly dictates otherwise.

The terms *"comprising", "comprises"* and *"comprised* of" as used herein are synonymous with *"including", "includes", "containing"* or *"contains",* and are inclusive or open-ended and do not exclude additional, non-recited members, elements or method steps. If used, the phrase *"consisting of'* is closed and excludes all additional elements. Further, the phrase *"consisting essentially of* excludes additional material elements but allows the inclusion of non-material elements that do not substantially change the nature of the invention.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to* x" specifically includes 0 wt.%: the ingredient defined by said range may be absent from the composition or may be present in the composition in an amount up to x wt.%.

The terms *"preferred", "preferably", "desirably", "particularly", "in particular"* and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein, room temperature is 23°C plus or minus 2°C. As used herein, *"ambient conditions"* means the temperature and pressure of the surroundings in which the composition is located or in which a coating layer or the substrate of said coating layer is located.

The molecular weights referred to in this specification are measured with gel permeation chromatography (GPC) using polystyrene calibration standards, such as is done according to ASTM 3536.

Viscosities of the coating compositions described herein are, unless otherwise stipulated, measured using the Brookfield Viscometer at standard conditions of 25°C and 50% Relative Humidity (RH). The method of calibration, the spindle type and rotation speed of the Brookfield Viscometer are chosen according to the instructions of the manufacturer as appropriate for the composition to be measured.

As used herein, the term softening point (°C.) used in regard to waxes herein is the Ring & Ball softening point, which is measured unless otherwise indicated according to ASTM E28.

*"Two-component (2K) compositions"* in the context of the present invention are understood to be compositions in which a first component (A) and a second component (B) must be stored in separate vessels because of their (high) reactivity. The two components are mixed only shortly before application and then react, typically without additional activation, with bond formation and thereby formation of a polymeric network. Herein higher temperatures may be applied in order to accelerate the cross-linking reaction.

The term *"monofunctional",* as used herein, refers to having one polymerizable moiety. The term *"polyfunctional",* as used herein, refers to having more than one polyrnerizable moiety.

The term *"bio-based carbon content"* references that percentage of the total carbon of a compound or composition which is biogenic. That percentage is determined in accordance with ASTM D6866 and is based on ¹⁴C radiocarbon analysis.

As used herein, the term *"free radical initiator"* refers to chemical species which either via a reduction-oxidation reaction or upon exposure to sufficient energy - in the form of light or heat, for example - yields a radical which is uncharged, but which possesses at least one unpaired electron. Thus, as will be understood by a person skilled in the art, a *"radical generating thermal initiator"* is a compound which can be activated by thermal energy to generate a radical thereof upon, for instance, heating or irradiation of the infrared or microwave wavelength regions.

As used herein, *"polyol"* refers to any compound comprising two or more hydroxyl groups: the term is thus intended to encompass diols, triols and compounds containing four or more -OH groups.

As used herein, the term *"thermoplastic polyurethane"* refers to a thermoplastic elastomer based on polyurethane. A thermoplastic elastomer is an elastomer which remains thermoplastic when repeatedly heated and cooled within the temperature range typical for processing and use of the material. For the purposes of the present invention, the term *"thermoplastic"* refers to the ability of a polymer to soften when heated and harden when cooled in repeated heating-cooling cycles within a temperature range typical for it and to be repeatedly moldable by means of flow in the softened state to produce semifinished parts or articles in the form of molding, extrudates or thermoformed parts. Where the thermoplastic polyurethane retains cross-linkable groups, the thermoplastic polyurethane may - after crosslinking - often be processable thermoplastically to only a limited extent. However, for the purposes of the present text, this crosslinked, originally thermoplastic polyurethane is included under the term *"thermoplastic polyurethane".*

As used herein, the term *"lactone monomer"* refers to a compound that includes at least one lactone ring, said ring being a cyclic ester which is conventionally the condensation product of an alcohol group and a carboxylic acid group in the same molecule. The term *"lactam monomer"* analogously references a compound including at least lactam ring, said ring being a cyclic amide.

As used herein, "*(meth*)*acryl*" is a shorthand term referring to "*acryl*" and/or "*methacryl*". Thus the term *"(meth)acrylamide"* refers collectively to acrylamide and methacrylamide.

As used herein, "*C*₁-*Cₙ alkyl*" group refers to a monovalent group that contains 1 to n carbons atoms, that is a radical of an alkane and includes straight-chain and branched organic groups. As such, a "*C₁*-*C₁₈* alkyl" group refers to a monovalent group that contains from 1 to 18 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more halogen. Where applicable for a given moiety (R), a tolerance for one or more non-halogen substituents within an alkyl group will be noted in the specification.

The term *"C₁-C₁₈ hydroxyalkyl"* as used herein refers to a HO-(alkyl) group having from 1 to 18 carbon atoms, wherein the alkyl group is as defined above.

An *"alkoxy group"* refers to a monovalent group represented by -OA where A is an alkyl group: non-limiting examples thereof are a methoxy group, an ethoxy group and an iso-propyloxy group. The term "*C₁-C₁₈ alkoxyalkyl*" as used herein refers to an alkyl group having an alkoxy substituent as defined above and wherein the moiety (*alkyl-O-alkyl*) comprises in total from 1 to 18 carbon atoms: such groups include methoxymethyl (-CH₂OCH₃), 2-methoxyethyl (-CH₂CH₂OCH₃) and 2-ethoxyethyl. Analogously, the term "*C₇-C₁₈ alkoxyaryl*" as used herein refers to an aryl group having an alkoxy substituent as defined above and wherein the moiety (*aryl-O-alkyl*) comprises in total from 7 to 18 carbon atoms.

The term "*C*₂-*C*₄ *alkylene"* as used herein, is defined as saturated, divalent hydrocarbon radical having from 2 to 4 carbon atoms.

The term "*C*₃ -*C₁₈ cycloalkyl*" is understood to mean a saturated, mono- or polycyclic hydrocarbon group having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

The term *"C₃-C₅cycloalkylC₁-C₃alkyf*" as used herein means an C₃-C₅ cycloalkyl group attached to an C₁-C₃ alkyl group, both with the same meaning as previously defined.

As used herein, "*C*₂*-C*₁₈ *alkenyl*" refers to hydrocarbyl groups having from 2 to 18 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, "*E*" and "*Z*" configurations, as appreciated by those of ordinary skill in the art. Examples of said C₂-C₂₀ alkenyl groups include, but are not limited to: -CH=CH₂; - CH=CHCH₃; -CH₂CH=CH₂; -C(=CH₂)(CH₃); -CH=CHCH₂CH₃; -CH₂CH=CHCH₃; - CH₂CH₂CH=CH₂; -CH=C(CH₃)₂; -CH₂C(=CH₂)(CH₃); -C(=CH₂)CH₂CH₃; -C(CH₃)=CHCH₃; - C(CH₃)CH=CH₂; -CH=CHCH₂CH₂CH₃; -CH₂CH=CHCH₂CH₃; -CH₂CH₂CH=CHCH₃; - CH₂CH₂CH₂CH=CH₂; -C(=CH₂)CH₂CH₂CH₃; -C(CH₃)=CHCH₂CH₃; -CH(CH₃)CH=CHCH; - CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, an "*C*₆-*C*₁₈ *aryl*" group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

As used herein, *"alkylaryf'* refers to alkyl-substituted aryl groups, both groups being defined as above. Further, as used herein "*aralkyl*" means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. *"Heteroalkyl',* "*heterocycloalkyl*" and "*heteroaryf*" moieties are alkyl, cycloalkyl and aryl groups as defined hereinabove, respectively, containing N, O, Si or S as part of their structure.

More specifically, the term "*C₁*-*C₉ heteroaryl*" as used herein means an aromatic group having from 1 to 9 carbon atoms and from 1 to 4 heteroatoms. The group may be attached via a nitrogen atom if feasible or via a carbon atom. Exemplary C₁-C₉ heteroaryl groups include imidazolyl, thiadiazolyl, pyridinyl, pyrimidinyl, furyl, pyrazolyl, isoxazolyl, tetrazolyl and quinolyl. All carbon atoms of the group may optionally be substituted with one or more halogen.

The term *"C₁-C₉heteroarylC₁-C₃alkyf*" as used herein references an C₁-C₉ heteroaryl group attached to a C₁-C₃ alkyl group, both with the same meaning as previously defined.

The term *"*C₂-C₅ *heterocycloalkyf*" as used herein means a saturated cyclic hydrocarbon having from 2 to 5 carbon atoms and from 1 to 3 heteroatoms: all carbon atoms of the group may optionally be substituted with one or more halogen. For completeness, the term "*C₂-C₅heterocycloalkylC₁-C₃alkyl*" references a C₂-C₅ heterocycloalkyl group attached to an C₁-C₃ alkyl group, both with the same meaning as previously defined.

As used herein, *"metallic"* means any type of metal, metal alloy, or mixture thereof.

As used herein, the term *"catalytic amount*" means a sub-stoichiometric amount of catalyst relative to a reactant, except where expressly stated otherwise.

### DETAILED DESCRIPTION OF THE INVENTION

### FIRST COMPONENT

### a) Ethylenically unsaturated monomer

The composition of the present disclosure comprises from 10 to 80 wt.%, based on the weight of said composition, of at least one ethylenically unsaturated monomer. It is preferred that the composition comprises from 15 to 75 wt.%, for example from 20 to 70 wt.% of a) said at least one ethylenically unsaturated monomer. Such monomers can, in principle, be any ethylenically unsaturated monomer.

### a) i) (Meth)acrylate Monomer

The ethylenically unsaturated monomers (part a) may comprise or consist of at least one (meth)acrylate monomer. It is preferred that (meth)acrylate monomer(s) constitute from 10 to 80 wt.% of the two-component composition.

There is no particular intention to limit the (meth)acrylate monomers having utility herein and it is considered that the (meth)acrylate monomers may be any ester of acrylic acid or methacrylic acid known to the art. That said, exemplary (meth)acrylic monomers include but are not limited to:
- C₁-C₁₈ alkyl esters of (meth)acrylic acid, such as methyl (meth)acrylate, ethyl (meth)acrylate, n-propyl (meth)acrylate, isopropyl (meth)acrylate, butyl (meth)acrylate (all isomers), hexyl (meth)acrylate, n-heptyl(meth)acrylate, n-octyl(meth)acrylate, 2-ethylhexyl (meth)acrylate, n-nonyl(meth)acrylate, n-decyl(meth)acrylate, n-dodecyl(meth)acrylate and n-stearyl(meth)acrylate;
- C₃-C₁₈ cycloalkyl esters of (meth)acrylic acid, such as cyclohexyl(meth)acrylate and isobornyl(meth)acrylate;
- C₆-C₁₈ aryl esters of (meth)acrylic acid, such as phenyl(meth)acrylate and tolyl(meth)acrylate;
- C₇-C₂₄ aralkyl esters of (meth)acrylic acid, such as benzyl(meth)acrylate;
- C₁-C₁₈ alkoxyalkyl esters of (meth)acrylic acid, such as 2-methoxyethyl(meth)acrylate, 2-ethoxyethyl(meth)acrylate and 3-methoxybutyl(meth)acrylate;
- fluorine-containing C₁-C₁₈ alkyl esters of (meth)acrylic acid, such as trifluoromethylmethyl(meth)acrylate, 2-trifluoromethylethyl(meth)acrylate, 2-perfluoroethylethyl(meth)acrylate, 2-perfluoroethyl-2-perfluorobutylethyl(meth)acrylate, 2-perfluoroethyl(meth)acrylate, perfluoromethyl(meth)acrylate, diperfluoromethylmethyl(meth)acrylate, 2-perfluoromethyl-2-perfluoroethylmethyl(meth)acrylate, 2-perfluorohexylethyl(meth)acrylate, 2-perfluorodecylethyl(meth)acrylate and 2-perfluorohexadecylethyl(meth)acrylate;
- C₁-C₁₈ hydroxyalkyl esters of (meth)acrylic acid and in particular C₁-C₆ hydroxyalkyl esters of (meth)acrylic acid, such as 2-hydroxyethyl(meth)acrylate, 2-hydroxypropyl(meth)acrylate and pentaerythritol tri(meth)acrylate;
- di/poly-esters of di/poly-functional alcohols, such as ethylene glycol di(meth)acrylate, 1,3 or 1,4-butanediol di(meth)acrylate, 1,6-hexanediol di(meth)acrylate, trimethylolpropane tri(meth)acrylate; ethoxylated trimethylolpropane triacrylate; trimethylol propane trimethacrylate; dipentaerythritol monohydroxypentacrylate; pentaerythritol triacrylate; neopentyl glycoldiacrylate; pentaerythritol tetraacrylate; 1,2-butylene glycoldiacrylate; trimethylopropane ethoxylate tri(meth)acrylate; glyceryl propoxylate tri(meth) acrylate; tripropyleneglycol di(meth)acrylate; neopentylglycol propoxylate di(meth)acrylate; triethyleneglycol di(meth)acrylate; and, butylene glycol di(meth)acrylate.
- C₁-C₁₈ aminoalkyl esters of (meth)acrylic acid, such as 2-aminoethyl(meth)acrylate, dimethylaminoethyl (meth)acrylate and (meth)acryloxyethoxyethylamine;
- C₁-C₁₈ alkoxysilyl-containing alkyl esters of (meth)acrylic acid, such as γ-(methacryloyloxypropyl)trimethoxysilane;
- ethylene oxide or propylene oxide adducts of (meth)acrylic acid;
- (meth)acrylate esters formed by alcohols bearing other functional groups, such as tetrahydrofurfuryl (meth)acrylate; and,
- (meth)acrylate esters of further bio-based monohydroxy alcohols or polyol compounds including but not limited to: (meth)acryloyl-L-lysine; epoxized soya bean oil (meth)acrylate; sugar derived (meth)acrylates, such as Ecomer available from Ecosynthetix; cardanol derived (meth)acrylates such as the NX-7202 to NX-7207 series available from Cardolite; and, vegetable oil derived (meth)acrylates such as MERCRYL available from HOBUM Oleochemicals.

The composition comprises at least one (meth)acrylate monomer represented by Formula M:

H₂C=CQCO₂R¹ (M)

wherein:
Q is hydrogen, halogen or a C₁ alkyl group; and,
R¹ is C₁-C₁₈ alkyl, C₁-C₁₈ hydroxyalkyl, C₃-C₁₈ cycloalkyl, C₃-C₅cycloalkylC₁-C₃alkyl, C₂-C₅heterocycloalkyl, C₂-C₅heterocycloalkylC₁-C₃alkyl, C₂-C₂₀ alkenyl, C₂-C₁₂ alkynyl, C₆-C₁₈ aryl, C₁-C₉ heteroaryl, C₁-C₉heteroarylC₁-C₃alkyl, C₇-C₂₄ alkaryl or C₇-C₂₄ aralkyl.

Preferably, R¹ in Formula M is C₁-C₁₂ alkyl, C₁-C₁₂ hydroxyalkyl, C₃-C₁₂ cycloalkyl, C₃-C₅cycloalkylC₁-C₃alkyl, C₂-C₅heterocycloalkyl, C₂-C₅heterocycloalkylC₁-C₃alkyl, C₆-C₁₈ aryl, C₁-C₉ heteroaryl, C₁-C₉heteroarylC₁-C₃alkyl, C₇-C₁₈ alkaryl and C₇-C₁₈ aralkyl. Mention may be made of that embodiment wherein R¹ is C₁-C₁₂ alkyl, C₁-C₁₂ hydroxyalkyl, C₃-C₁₂ cycloalkyl, C₃-C₅cycloalkylC₁-C₃alkyl C₂-C₅heterocycloalkyl or C₂-C₅heterocycloalkylC₁-C₃alkyl.

For example, the composition may comprise: at least one (meth)acrylate monomer according to Formula M wherein R¹ is C₁-C₁₂ alkyl; and / or, at least one (meth)acrylate monomer according to Formula M wherein R¹ is C₂-C₅heterocycloalkylC₁-C₃alkyl. The composition might, in particular, comprise tetrahydrofurfuryl (meth)acrylate and at least one further (meth)acrylate monomer of Formula M wherein R¹ is C₁-C₁₂ alkyl. Exemplary C₁-C₁₂ alkyl (meth)acrylates include: methyl (meth)acrylate; ethyl (meth)acrylate; n-propyl (meth)acrylate; isopropyl (meth)acrylate; n-butyl(meth)acrylate; isobutyl (meth)acrylate; tert-butyl (meth)acrylate; n-pentyl (meth)acrylate; n-hexyl (meth)acrylate; n-heptyl (meth)acrylate; n-octyl(meth)acrylate; 2-ethylhexyl-(meth)acrylate; nonyl (meth) acrylate; decyl (meth)acrylate; dodecyl (meth)acrylate; trifluoromethylmethyl (meth)acrylate; 2-trifluoromethylethyl (meth)acrylate; 2-perfluoro ethylethyl (meth)acrylate; 2-perfluoroethyl-2-perfluorobutylethyl (meth)acrylate; 2-perfluoroethyl (meth)acrylate; perfluoromethyl (meth)acrylate; diperfluoromethylmethyl (meth)acrylate; 2-perfluoromethyl-2-perfluoroethylmethyl (meth)acrylate; 2-perfluorohexylethyl (meth)acrylate; and, 2-perfluorodecylethyl (meth)acrylate.

The above aside, it is not precluded that part a) of the composition comprises a macro-monomer component consisting of one or more oligomers selected from the group consisting of: urethane (meth)acrylates, polyester (meth)acrylates; polyether (meth)acrylates; and, (meth)acrylate functionalized polymers and copolymers of conjugated dienes. However, such oligomeric compounds - which may be mono- or polyfunctional with respect to the polymerizable (meth)acrylate functionality but which are based on repeated structural urethane, ester, ether and hydrocarbyl subunits - should not usually constitute more than 30 wt.% of the total of (meth)acrylate monomers in said composition.

As is known in the art, urethane (meth) acrylate oligomers may be prepared by reaction of a polyfunctional (meth)acrylate bearing a hydroxyl group with a polyisocyanate as defined herein above. In particular, the polyfunctional (meth)acrylate bearing a hydroxyl group may be selected from the group consisting of: 2-hydroxyethyl (meth)acrylate; 2-hydroxyisopropyl (meth)acrylate; 4-hydroxybutyl (meth)acrylate; hydroxyethylcaprolactone (meth)acrylate; pentaerythritol tri(meth)acrylate; pentaerythritol tetra(meth)acrylate; dipentaerythritol penta(meth)acrylate; dipentaerythritol hexa(meth)acrylate; and, combinations thereof.

Suitable polyester (meth)acrylate oligomers are obtained by reacting (meth)acrylic acid with a polyester prepared from a polybasic acid or an anhydride thereof and a polyhydric alcohol. Examples of the polybasic acid include, but are not limited to: phthalic acid; succinic acid; adipic acid; glutaric acid; sebacic acid; isosebacic acid; tetrahydrophthalic acid; hexahydrophthalic acid; 2,4- or 2,5-furandicarboxylic acid; dimer acid; trimellitic acid; pyromellitic acid; pimelic acid; and, azelaic acid. Examples of the polyhydric alcohol include but are not limited to: 1,4-butanediol; 1,6-hexanediol; diethylene glycol; 1,2-propylene glycol; 1,3-butylene glycol; neopentyl glycol; dipropylene glycol; polyethylene glycol; and, polypropylene glycol.

As is known in the art, polyether (meth)acrylate oligomers may be obtained by an ester exchange reaction between a polyether and a (meth)acrylate ester, such as ethyl methacrylate. Exemplary polyethers include polyethers obtained from ethoxylated or propoxylated trimethylolpropane, pentaerythritol or the like, or by polyetherification of 1 ,3-propanediol or the like.

In an exemplary embodiment, part a) may comprise or consist of at least one (meth)acrylate ester corresponding to Formula (O): 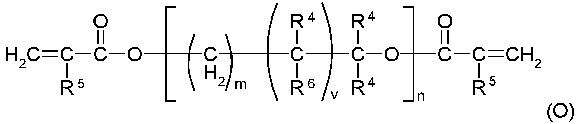 wherein:
R⁴ is hydrogen, C₁-C₄ alkyl or 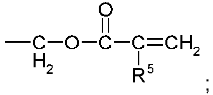
R⁵ is hydrogen, halogen or C₁ alkyl;
R⁶ is hydrogen, hydroxy or 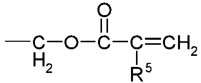
m is an integer ≥1, preferably from 1 to 8;
v is 0 or 1; and,
n is an integer ≥3, preferably from 3 to 30.

Of such polyether (meth)acrylates of Formula O mention may, in particular, be made of poly(ethylene glycol) di(meth)acrylates possessing the structure below: 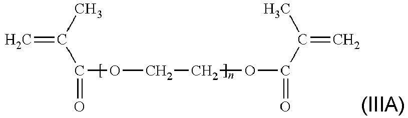 wherein: n is ≥3, preferably from 3 to 30, more preferably from 3 to 20.

As such, specific examples include but are not limited to: PEG 200 DMA (n≈ 4); PEG 400 DMA (n≈9); PEG 600 DMA (n≈ 14); and, PEG 800 DMA (n≈19), in which the assigned number (e.g., 400) represents the weight average molecular weight of the glycol portion of the molecule.

Further exemplary oligomeric (meth)acrylates include hydrogenated polybutadiene di(meth)acrylate or hydrogenated polyisoprene di(meth)acrylate. Typically these compounds are synthesized according to one of the following mechanisms: an esterification reaction of hydrogenated polybutadiene polyol or hydrogenated polyisoprene polyol with (meth)acrylic acid; an ester exchange reaction of hydrogenated polybutadiene polyol or hydrogenated polyisoprene polyol with (meth)acrylic acid ester; an addition reaction of hydrogenated polybutadiene polyol or hydrogenated polyisoprene polyol with an isocyanato group-containing (meth)acrylate; or, an addition reaction of either hydrogenated polybutadiene polyol or hydrogenated polyisoprene polyol, polyisocyanate and an alcoholic hydroxyl group-containing (meth)acrylate. Hydrogenated polybutadiene (meth)acrylates and hydrogenated polyisoprene (meth)acrylates are equally obtainable as commercially products, such as NISSO-PB TEAI-1000, made by Nippon Soda Co., Ltd.

It is known in the art that incorporation of certain additional, non-polymerizing functionalities into (meth)acrylate monomers can improve the surface adhesion of polymers derived therefrom. Mention in this regard may be made of anhydride, phosphate or phosphonate functionalities and (meth)acrylate monomers bearing such functionalities may be used in part a)i) of the present composition. Exemplary monomers include: monomethacryloxyethyl phosphate; bis(2-methacryloxyethyl) phosphate; 10-[(2-methylprop-2-enoyl)oxy]decyl dihydrogen phosphate (*10-methacryloyloxydecyl dihydrogen phosphate*); and, 4-methacryloxyethyl trimellitic anhydride.

### a)ii) Co-Polymerizable Acid

The composition may optionally comprise at least one co-polymerizable acid. When employed, said acid(s) may be added in an amount up to 40 wt.%, for instance up to 25 wt.% of the total amount of ethylenically unsaturated monomers present. Said at least one co-polymerizable acid may therefore constitute from 0 to 15 wt.% of the total molar amount of ethylenically unsaturated monomers. For completeness, whilst such monomers should typically be used in the form of free acid, it is not precluded that the constituent acid groups of the monomers be partially or completely neutralized with suitable bases, provided this does not compromise their participation in co-polymerization.

Without intention to limit the present invention, co-polymerizable acid monomers should be selected from the group consisting of: ethylenically unsaturated carboxylic acids; ethylenically unsaturated sulfonic acids; ethylenically unsaturated phosphoric acids; and, ethylenically unsaturated phosphonic acids. Suitable ethylenically unsaturated sulfonic acids are, for instance, vinylsulfonic acid, styrenesulfonic acid and acrylamidomethylpropanesulfonic acid.

Preferably said at least one co-polymerizable acid of the composition comprises or consists of ethylenically unsaturated carboxylic acids selected from the group consisting of: α,β-monoethylenically unsaturated monocarboxylic acids; α,β-monoethylenically unsaturated dicarboxylic acids; C₁-C₆ alkyl half-esters of α,β-monoethylenically unsaturated dicarboxylic acids; α,β-monoethylenically unsaturated tricarboxylic acids; and, C₁-C₆ alkyl esters of α,β-monoethylenically unsaturated tricarboxylic acids bearing at least one free carboxylic acid group; and, mixtures thereof. In particular, said at least one co-polymerizable acid of the composition comprises or consists of ethylenically unsaturated carboxylic acids selected from the group consisting of: methacrylic acid; acrylic acid, itaconic acid; maleic acid; aconitic acid; crotonic acid; muconic acid ((2E,4E)-Hexa-2,4-dienedioic acid); fumaric acid; mono-2-(methacryloyloxy)ethyl maleate; and, mono-2-methacryloyloxyethyl succinate.

### a)iii) Further Monomers

It is noted that the present invention does not preclude the presence in the composition of vinyl monomers which can be copolymerized with (meth)acrylate monomers and which are selected from the group consisting of: styrene monomers, such as styrene, vinyltoluene, α-methylstyrene and chlorostyrene; fluorine containing vinyl monomers, such as perfluoroethylene, perfluoropropylene and fluorinated vinylidene; silicon containing vinyl monomers such as vinyltrimethoxysilane and vinyltriethoxysilane; maleimide monomers, such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile group containing vinyl monomers, such as acrylonitrile and methacrylonitrile; amide group containing vinyl monomers, such as acrylamide and methacrylamide; N-vinyl acetamide; N-methyl-N-vinyl acetamide; vinyl ethers; vinyl esters such as vinyl acetate, vinyl propionate, vinyl pivalate, vinyl benzoate and vinyl cinnamate; alkenes such as ethylene and propylene; conjugated dienes such as butadiene and isoprene; vinyl terminated polymers and copolymers of conjugated dienes, of which vinyl terminated polybutadiene is an example; and vinyl chloride, vinylidene chloride, allyl chloride and allylalcohol.

In addition to 4,5-dihydro-5-methyl-3-methylene-2(3H)-furanone, the present invention also does not preclude the presence in the first component of the composition of further unsaturated lactone or lactam monomers. In particular, the composition may comprise one or more exomethylene lactone or lactam monomers of the general formula (L) below: 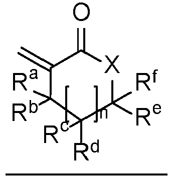 wherein:
X is O or NR^{g};
n is 0, 1 or 2; and,
R^{a}, R^{b}, R^{c}, R^{d}, R^{e}, R^{f} and R^{g} are independently selected from the group consisting of H, -OH, -CH(O), halogen, C₁-C₁₂ alkyl and C₆-C₁₈ aryl.

In an embodiment, the composition comprises at least one monomer of general formula (L) wherein: X is O; n is 0; and, R^{a}, R^{b}, R^{c} R^{d}, R^{e}, R^{f} and R^{g} are independently selected from the group consisting of H, -OH, halogen and C₁-C₄ alkyl. Exemplary monomers in accordance with this embodiment include: α-methylene-γ-butyrolactone; β-hydroxy-α-methylene-γ-butyrolactone; and, α-methylene-γ-valerolactone (*4,5-dihydro-5-methyl-3-methylene-2(3H)-furanone*)*.* And a particular preference for the inclusion of α-methylene-γ-valerolactone may be noted.

The source of α-methylene-γ-valerolactone (*4,5-dihydro-5-methyl-3-methylene-2(3H)-furanone*) is not intended to be limited but the compound should desirably be obtained from a bio-renewable source, in particular from lignocellulosic biomass. The synthesis of α-methylene-γ-valerolactone from bio-renewable levulinic acid has been disclosed in *inter alia* WO2015026234A1 (University of Utrecht Holding BV): conventionally, 5-dihydro-5-methyl-3-methylene-2(3H)-furanone is formed by : i) catalytic transfer hydrogenation and cyclization (CTHC) of the levulinic acid or a salt or ester thereof to form γ-valerolactone, the catalysts - typically heterogeneous catalysts - being employed to lower the activation energy, thereby making the hydrogenation reaction more feasible or increasing the reaction rate; and, ii) gas phase condensation reaction of para-formaldehyde with γ-valerolactone over heterogenous acid or base-catalysts to form the title compound. The α-methylene-γ-valerolactone may equally be prepared from 2-furaldehyde (furfural) which may be obtained from hemicellulose or other pentose rich polysaccharides, in particular xylans, mannans, xyloglucans and β-glucans.

Said unsaturated lactone or lactam monomers, when present, might constitute from 2 to 80 wt.% for example from 10 to 60 wt.% or from 10 to 40 wt.% of the composition.

### SECOND COMPONENT

### b) Radical Generating Initiator

The second component of the composition necessarily comprises at least one radical generating initiator. The second component comprises from 0.1 to 10 wt.%, for example from 0.1 to 7.5 wt.% or from 0.1 to 5 wt.% of b) said at least one radical generating initiator, based on the total weight of the composition.

In an important embodiment of the composition, a redox initiator system is employed which consists of an oxidizing agent which is present in the second component and an activating reducing agent: the oxidizing agent and the reducing agent are combined in a proportion that yields polymerization initiating radicals. Such a combination can typically be made under mild conditions without a supplementary energy source. Either the oxidizing agent alone or both of the oxidizing agent and the reducing agent may provide initiating radicals.

For such a redox system, suitable oxidizing agents may be selected from the group consisting of cyclic peroxides, diacyl peroxides, dialkyl peroxides, hydroperoxides, peroxycarbonates, peroxydicarbonates, peroxyesters and peroxyketals. The corresponding activator or reducing agent may be selected from the group consisting of: alkali metal sulfites; alkali metal hydrogensulfites; alkali metal metabisulfites; formaldehyde sulfoxylates; alkali metal salts of aliphatic sulfinic acids; alkali metal hydrogensulfides; salts of polyvalent metals, in particular Co(II) salts and Fe(II) salts such iron(II) sulfate, iron(II) ammonium sulfate or iron(II) phosphate; dihydroxymaleic acid; benzoin; ascorbic acid; reducing amines, in particular aromatic tertiary amines such as N,N-bis(2-hydroxyethyl)-p-toluidine (*diethanol-para-toluidine,* DE-p-T), 2-(4-dimethylaminophenyl)ethyl alcohol (DMAPE), 4-tert butyl dimethyl aniline, 3-dimethylaminobenzoic acid, 4-dimethylaminobenzoic acid, ethyl 4-dimethylaminobenzoate (EDMAB), 2-ethylhexyl 4-dimethylaininobenzoate and 4-dimethylaminobenzoate; and, reducing saccharides, such as sorbose, glucose, fructose and/or dihydroxyacetone.

It is conventional for the reducing agents of the redox initiator system to be included in the first component with the polymerizable species. It is however not precluded that the reducing agent be added to the second component shortly prior to the contacting of the first and second components. The percentage by weight of free radical initiator present in the second component can be easily determined in both these instances.

In an alternative embodiment of the composition, the initiator system consists of at least one free radical generating thermal initiator. Without intention to limit the present invention, an exemplary class of radical generating thermal initiators suitable for use herein are organic peroxides, selected for example from: cyclic peroxides; diacyl peroxides; dialkyl peroxides; hydroperoxides; peroxycarbonates; peroxydicarbonates; peroxyesters; and, peroxyketals.

In an embodiment, useful hydroperoxide compounds may be represented by the formula:

R^{p}OOH

wherein: R^{p} is an aliphatic or aromatic group containing up to 18 carbon atoms, and
preferably wherein: R^{p} is a C₁-C₁₂ alkyl, C₆-C₁₈ aryl or C₇-C₁₈ aralkyl group.

For completeness, however, included within the definition of hydroperoxides are materials such as organic peroxides or organic peresters which decompose or hydrolyze to form organic hydroperoxides *in situ:* examples of such peroxides and peresters are cyclohexyl and hydroxycyclohexyl peroxide and t-butyl perbenzoate, respectively.

Of the aforementioned organic peroxides, a preference for diacyl peroxides is acknowledged. Such diacyl peroxides should in particular meet the general formula:

R^{q}C(O)OOC(O)R^{r}

wherein:
R^{q} is a C₁-C₁₈ alkyl, C₆-C₁₈ aryl or C₇-C₁₈ aralkyl group; and,
R^{r} is a C₁-C₁₈ alkyl, C₆-C₁₈ aryl or C₇-C₁₈ aralkyl group.

As exemplary organic peroxide initiators, which may be used alone or in combination, there may be mentioned: cumene hydroperoxide (CHP); para-menthane hydroperoxide; t-butyl hydroperoxide (TBH); t-butyl perbenzoate; t-butyl peroxy pivalate; t-butyl peroxy acetate; t-butyl peroxy-2-hexanoate; t-amyl hydroperoxide; 1,2,3,4-tetramethylbutyl hydroperoxide; benzoyl peroxide; dibenzoyl peroxide; 1,3-bis(t-butylperoxyisopropyl) benzene; diacetyl peroxide; butyl 4,4-bis (t-butylperoxy) valerate; p-chlorobenzoyl peroxide; t-butyl cumyl peroxide; di-t-butyl peroxide; di(3,5,5-trimethylhexanoyl) peroxide, commercially available as Trigonox 36 from Akzo Nobel; dilauroyl peroxide; didecanoyl peroxide; dicumyl peroxide; 2,5-dimethyl-2,5-di-t-butylperoxyhexane; 2,5-dimethyl-2,5-di-t-butyl-peroxyhex-3-yne; and, 4-methyl-2,2-di-t-butylperoxypentane.

Without intention to limit the present invention, a further exemplary class of radical generating thermal initiators suitable for use herein are azo polymerization initiators, selected for example from: azo nitriles; azo esters; azo amides; azo amidines; azo imidazoline; and, macro azo initiators.

As representative examples of suitable azo polymerization initiators may be mentioned: 2,2'-azobis (2-methylbutyronitrile); 2,2'-azobis(isobutyronitrile); 2,2'-azobis(2,4-dimethylvaleronitrile); 2,2'-azobis(4-methoxy-2,4-dimethylvaleronitrile); 1,1'-azobis(cyclohexane-1-carbonitrile); 4,4'-azobis(4-cyanovaleric acid); dimethyl 2,2'-azobis(2-methylpropionate); 2,2'-azobis[2-methyl-N-(2-hydroxyethyl)propionamide]; 2,2'-azobis (N-butyl-2-methylpropionamide); 2,2'-azobis[2-(2-imidazolin-2-yl)propane]dihydrochloride; 2,2'-azobis[2-(2-imidazolin-2-yl)propane]; 2,2'-azobis(2-methylpropionamidine)dihydrochloride; 2,2'-azobis[N-(2-carboxyethyl)-2-methylpropionamidine]tetrahydrate; 4,4-azobis(4-cyanovaleric acid), polymer with alpha, omega-bis(3-aminopropyl)polydimethylsiloxane (VPS-1001, available from Wako Pure Chemical Industries, Ltd.); and, 4,4'-azobis(4-cyanopentanoicacic)·polyethyleneglycol polymer (VPE-0201, available from Wako Pure Chemical Industries, Ltd.).

### BIO-BASED THERMOPLASTIC POLYURETHANE

The composition of the present invention comprises c) at least one thermoplastic polyurethane obtained from the reaction of:
I) at least one polyether polyol having a weight average molecular weight of from 400 to 4000 g/mol., a polydispersity (PD) of less than 3 and a bio-based carbon content of at least 50%, preferably at least 90% or at least 95%;
II) at least one polyol having a molecular weight of less than 400 g/mol;
III) optionally at least one further active hydrogen compound; and,
IV) at least one polyisocyanate compound,
wherein in said reaction the molar ratio of hydroxyl groups to NCO groups is at least 1:1, for instance from 1:1 to 2:1 or preferably from 1:1 to 1.2:1. The composition comprises from 5 to 70 wt.%, based on the weight of the composition of c) said at least one thermoplastic polyurethane. It is preferred that the composition comprises from 10 to 40 wt.%, for example from 10 to 30 wt.% of c) said least one thermoplastic polyurethane, based on the weight of the composition.

For completeness as regards reactant polyol (I), a *"polyether"* is understood to be a polymer whose repeating unit contains ether functionalities C-O-C in the main chain. Polymers having lateral ether groups, such as cellulose ethers, starch ethers, and vinyl ether polymers, as well as polyacetals, are therefore not covered by this definition. Desirably herein, the polyether polyol (I) is a polyoxyalkylene and in particular a polyoxy(C₂-C₄)alkylene.

In an important embodiment of the invention, said polyol (I) comprises or consists of a polyoxy(C₂-C₄)alkylene polyol (I) having a weight average molecular weight of from 400 to 4000 g/mol., a polydispersity (PD) of less than 3 and a bio-based carbon content of at least 50%, for example at least 90%, at least 95% or even of 100%. Such polyether polyol (I) may be obtained by the polymerization of bio-sourced monomers including but not limited to 1,2-ethanediol, 1,3-propanediol (PDO) and 1,4-butanediol. More particularly, said polyol (I) comprises or consists of a polytrimethylene ether glycol having a weight average molecular weight of from 400 to 4000 g/mol, a polydispersity (PD) of less than 3 and a bio-based carbon content of at least 90%, for example at least 95% or even of 100%. Exemplary commercial polytrimethylene ether glycols include: Velvetol H2000 and H2700 available from Weylchem; and, Cerenol^{®} H1000 and H2000 available from Dupont.

Exemplary polyols which have utility as the reactant (II) in the aforementioned reaction include, but are not limited to, C₂-C₁₈ alkane diols. Mention as polyol (III) may thus be made of: ethanediol; di-, tri- or tetraethylene glycol; 1,2-propanediol; di-, tri-, tetrapropylene glycol; 1,3-propanediol; 1,4-butanediol; 1,3-butanediol; 2,3-butanediol; 1,6-hexanediol; 1,5-pentanediol; 2,2-dimethyl-1,3-propanediol (neopentylglycol); 1,4-dihydroxycyclohexane; 1,4-dimethylcyclohexane; 1,8-octanediol; 1,10-decanediol; 1,12-decanediol; 2,2,4- and/or 2,4,4-trimethyl-1,3-pentanediol; and, mixtures thereof. Given that a number of biosynthetic routes to C₂-C₆ alkane diols are known in the art, the choice of bio-based reactant (II) may actually serve to increase the bio-based content of the synthesized thermoplastic polyurethane.

When one or more further active hydrogen compound (III) is present in the aforementioned reaction, it is preferred that such compound acts as a chain extender and is thereby preferably characterized by: a weight average molecular weight (Mw) of from 18 to 500 g/mol; and, having at least two active hydrogen containing groups. Water is not precluded from being such a compound (III). Equally, polyamines may find utility as chain extenders, optionally in combination with water. As exemplary polyamines which may be used alone or in combination there may be mentioned: aminated polypropylene glycols such as Jeffamine D-400, available from Huntsman Chemical Company; hydrazine; piperazine; amino ethyl piperazine; 2-methyl piperazine; 1,5-diamino-3-methyl-pentane; isophorone diamine; ethylene diamine; diamino butane; hexane diamine; hexamethylene diamine; tetramethylene tetraamine; aminoethyl propyl trimethoxy silane; diethylene triamine; triethylene tetramine; triethylene pentamine; ethanolamine; and, lysine.

Aside from chain extenders, it is noted that at least one monohydroxy alcohol can optionally be employed in synthesizing the non-ionic polyurethane as a further active hydrogen reactant (III). For example, a mono-functional polyoxyalkylene - such as polyoxyethylene or polyoxpropylene - can be incorporated into the polyurethane as a means of modifying the properties of the latex. When present, the monohydroxy alcohol is present in an amount of from 0.1 to 5 wt.%, based on the weight of reactants I) to IV).

As used herein *"polyisocyanate"* means a compound comprising at least two -N=C=O functional groups, for example from 2 to 5 or from 2 to 4 -N=C=O functional groups. Suitable polyisocyanates include aliphatic, cycloaliphatic, aromatic and heterocyclic isocyanates, dimers and trimers thereof, and mixtures thereof.

Aliphatic and cycloaliphatic polyisocyanates can comprise from 6 to 100 carbon atoms linked in a straight chain or cyclized and having at least two isocyanate reactive groups. Examples of suitable aliphatic isocyanates include but are not limited to straight chain isocyanates such as ethylene diisocyanate, trimethylene diisocyanate, tetramethylene diisocyanate, 1,6-hexamethylene diisocyanate (HDI), octamethylene diisocyanate, nonamethylene diisocyanate, decamethylene diisocyanate, 1,6,11-undecanetriisocyanate, 1,3,6- hexamethylene triisocyanate, bis(isocyanatoethyl)-carbonate, and bis (isocyanatoethyl) ether. Exemplary cycloaliphatic polyisocyanates include, but are not limited to, dicyclohexylmethane 4,4'-diisocyanate (H₁₂MDI), 1-isocyanatomethyl-3-isocyanato-1,5,5-trimethyl-cyclohexane (isophorone diisocyanate, IPDI), cyclohexane 1,4-diisocyanate, hydrogenated xylylene diisocyanate (H₆XDI), 1-methyl-2,4-diisocyanato-cyclohexane, m- or p-tetramethylxylene diisocyanate (m-TMXDI, p-TMXDI) and dimer fatty acid diisocyanate.

The term *"aromatic polyisocyanate"* is used herein to describe organic isocyanates in which the isocyanate groups are directly attached to the ring(s) of a mono- or polynuclear aromatic hydrocarbon group. In turn the mono- or polynuclear aromatic hydrocarbon group means an essentially planar cyclic hydrocarbon moiety of conjugated double bonds, which may be a single ring or may include multiple condensed (fused) or covalently linked rings. The term aromatic also includes alkylaryl. Typically, the hydrocarbon (main) chain includes 5, 6, 7 or 8 main chain atoms in one cycle. Examples of such planar cyclic hydrocarbon moieties include, but are not limited to, cyclopentadienyl, phenyl, napthalenyl-, [10]annulenyl-(1,3,5,7,9-cyclodecapentaenyl-), [12]annulenyl-, [8]annulenyl-, phenalene (perinaphthene), 1,9-dihydropyrene, chrysene (1,2-benzophenanthrene). Examples of alkylaryl moieties are benzyl, phenethyl, 1-phenylpropyl, 2-phenylpropyl, 3-phenylpropyl, 1-naphthylpropyl, 2-naphthylpropyl, 3-naphthylpropyl and 3-naphthylbutyl.

Exemplary aromatic polyisocyanates include, but are not limited to: all isomers of toluene diisocyanate (TDI), either in the isomerically pure form or as a mixture of several isomers; naphthalene 1,5-diisocyanate; diphenylmethane 4,4'-diisocyanate (MDI); diphenylmethane 2,4'-diisocyanate and mixtures of diphenylmethane 4,4'-diisocyanate with the 2,4' isomer or mixtures thereof with oligomers of higher functionality (so-called crude MDI); xylylene diisocyanate (XDI); diphenyl-dimethylmethane 4,4'-diisocyanate; di- and tetraalkyl-diphenylmethane diisocyanates; dibenzyl 4,4'-diisocyanate; phenylene 1,3-diisocyanate; and, phenylene 1,4-diisocyanate.

The polyisocyanates, where required, may have been biuretized and / or isocyanurated by generally known methods, such as described in UK Patent No. 889,050. It is also noted that the term *"polyisocyanate"* is intended to encompass pre-polymers formed by the partial reaction of the aforementioned aliphatic, cycloaliphatic, aromatic and heterocyclic isocyanates with polyols to give isocyanate functional oligomers, which oligomers may be used alone or in combination with free isocyanate(s).

The reaction yielding the thermoplastic polyurethane may be performed under catalysis and, for instance, at a temperature of from 25 to 100°C. Standard polyurethane catalysts known in the art include: stannous salts of carboxylic acids, such as stannous octoate, stannous oleate, stannous acetate and stannous laureate; dialkyltin dicarboxylates, such as dibutyltin dilaureate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; tin alkoxides, such as dibutyltin dimethoxide, dibutyltin diphenoxide and dibutyltin diisoproxide; tin oxides, such as dibutyltin oxide and dioctyltin oxide; the reaction products of dibutyltin oxides and phthalic acid esters; tin mercaptides; alkyl titanates; organoaluminum compounds such as aluminum trisacetylacetonate, aluminum trisethylacetoacetate and diisopropoxyaluminum ethylacetoacetate; chelate compounds such as zirconium tetraacetylacetonate and titanium tetraacetylacetonate; organosilicon titanium compounds; bismuth tris-2-ethylhexanoate; acid compounds such as phosphoric acid and p-toluenesulfonic acid; triphenylborane; triphenylphosphine; 1,8-diazabicycloundec-7-ene (DBU); 1,5-diazabicyclo[4.3.0]non-5-ene; 1,4-diazabicyclo[2.2.2]octane; 4-dimethylaminopyridine; 1,5,7-triazabicyclo[4.4.0]dec-5-ene; 7-methyl-1,5,7-triazabicyclo[4.4.0]dec-5-ene; 1,8-bis(tetramethylguanidino)naphthalene; and, 2-tert-butyl-1,1,3,3-tetramethylguanidine. Depending on the nature of the isocyanate, the amount of catalyst employed is typically in the range from 0.005 to 10% by weight of the mixture catalyzed (I to IV).

The thermoplastic polymer can optionally be made in the presence of an inert solvent, which solvent is removed at least in part at the conclusion of the reaction. When a solvent is used, examples of solvents which are not reactive with the isocyanate include: ketones such as acetone and butanone; ethers such as tetrahydrofuran, dioxane and dimethoxyethane; ether esters such as methoxypropyl acetate; (cyclic) amide and ureas such as dimethylformamide and dimethylacetamide; N,N'-dimethyl-2,5-dizapentanone; N-methylpyrrolidone; and, capped glycol ethers. Such solvents may be added at any stage of the polymer preparation.

For completeness, said bio-based thermoplastic polyurethane(s) c) present in the composition may be included in either the first component, the second component or both of said components.

### Further Thermoplastic Elastomers

This disclosure does not preclude the presence of further, distinct thermoplastic elastomers in the composition to supplement c) the bio-based thermoplastic polyurethane(s) as described hereinabove. Again said supplementary thermoplastic elastomers may be included in either the first component, the second component or both of said components. However such supplementary thermoplastic elastomers, when included, should not constitute more than 20 wt.% of the total weight of c) said bio-based thermoplastic polyurethane.

The supplementary thermoplastic elastomer is desirably non-crosslinked and, whilst it may be linear, branched, radial or star shaped in topology, is preferably linear. Further, the or each supplementary thermoplastic elastomer included in the composition should preferably be characterized by at least one of the following properties:
i) a Shore hardness of from 50A to 80D as measured using a durometer rendered appropriate in accordance with DIN 5122 *General requirements for materials testing machines, including verification and calibration;*
ii) an number average molecular weight (Mn) of from 5000 to 1000000 g/mol., preferably of from 5000 to 500000 g/mol., more preferably from 5000 to 200000 g/mol., as measured by Gel Permeation Chromatography;
iii) a modulus of elasticity of from 10 to 10000 MPa, as measured in accordance with DIN EN ISO 527-2 wherein the modulus of elasticity is calculated as the ratio of stress to strain from the initial rise in the obtained stress-strain curve;
iv) a density in the range from 1.05 to 1.30 g/cm³ as measured in accordance with DIN 53479; and,
v) a tensile strength of greater than 40 MPa as measured in accordance with DIN 53504 when unplasticized.

For completeness, these properties are not mutually exclusive: a given thermoplastic elastomer may be characterized by one, two, three, four or five of the properties.

As is known in the art, block copolymers provide an exemplary class of thermoplastic elastomer. Such block copolymers include: polyester-polyether multiblock copolymers, such as the Hytrel Series from DuPont; polyamide-polyether multiblock copolymers, such as the Pebax series from Atochem; and, block copolymers possessing hard blocks obtained from the polymerization of styrene or derivatives of styrene and soft blocks obtained from the polymerization of C₂-C₆ alkenes or C₄-C₈ alkadienes. Illustrative examples of that last group include block copolymers of: styrene-isoprene-styrene; styrene-butadiene-styrene, such as the Kraton D series available from Kraton Polymers; styrene-ethylene/butadiene-styrene; styrene-ethylene-styrene; styrene-ethylene/propylene-styrene; styrene-propylene-styrene; and, styrene-butylene-styrene.

The above aside, in an embodiment, the supplementary thermoplastic elastomer may be a thermoplastic polyurethane. The thermoplastic polyurethane suitable for inclusion may be sourced commercially. Examples thereof include: Estane, Pellethane, Pearlthane and Pearlbond^{™} 106, available from Lubrizol; Elastollan available from BASF; and, Desmopan available from Covestro.

In the alternative, the or each supplementary thermoplastic polyurethane to be included in the composition may be synthesized using processes established in the art. In an important example, the thermoplastic polyurethanes may be obtained from the reaction of: Is) at least one polyol having a weight average molecular weight of from 400 to 40000 g/mol; IIs) at least one polyol having a molecular weight of less than 500 g/mol, such as described herein above; IIIs) optionally further active hydrogen compounds, such as described herein above; and, IVs) at least one polyisocyanate compound, such as described herein above. The molar ratio of the hydroxyl (OH) to NCO groups of the reactants should be selected to ensure that no free NCO groups are present: the molar ratio of OH: NCO might therefore be at least 1:1, for instance from 1:1 to 2:1 or preferably from 1:1 to 1.2:1.

The at least one reactant polyol (Is) should herein be selected from the group consisting of: polyester polyols; polyether polyols; and, polycarbonate polyols. Said polyol (Is) should preferably have a number average molecular weight (Mn) of from 500 to 25000 g/mol, for instance from 500 to 10000 g/mol or from 500 to 5000 g/mol. Alternatively or additionally to this molecular weight characterization, the hydroxyl number of the reactant polyol should preferably be from 20 to 850 mg KOH/g, for instance from 25 to 500 mg KOH/g or from 25 to 250 mg KOH/g.

Polycarbonate diols may be obtained by reacting carbonic acid derivatives with diols. Exemplary carbonic acid derivatives are diaryl carbonates including but not limited to diphenyl carbonate, di(C₁-C₆)alkyl carbonates and phosgene. Exemplary diols include but are not limited to: ethylene glycol; 1,2-propanediol; 1,3-propanediol; 1,3-butanediol; 1,4-butanediol; 1,5-pentanediol; 1,6-hexanediol; cyclohexane dimethanol; diethylene glycol; dipropylene glycol; neopentylglycol; and, mixtures thereof.

Polyester diols may be obtained by reacting diols with either aliphatic, aromatic or cycloaliphatic dicarboxylic acids or, in some circumstances, the corresponding anhydrides thereof: the reaction may optionally take place in the presence of an esterification catalyst. Examples of suitable dicarboxylic acids include but are not limited to: adipic acid; glutaric acid; pimelic acid; suberic acid; nonanedicarboxylic acid; decanedicarboxylic acid; succinic acid; maleic acid; sebacic acid; azelaic acid; terephthalic acid; isophthalic acid; o-phthalic acid; tetrahydrophthalic acid; hexahydrophthalic acid; trimellitic acid; and, 1,4-cyclohexanedicarboxylic acid. Examples of suitable anhydrides include succinic, o-phthalic and trimellitic anhydride. It is noted that various commercially available dimeric fatty acids in saturated (hydrogenated) or unsaturated form may also be used as the dicarboxylic acid. And examples of suitable diols for the preparation of the polyester diols are: ethanediol; di-, tri- or tetraethylene glycol; 1,2-propanediol; di-, tri-, tetrapropylene glycol; 1,3-propanediol; 1,4-butanediol; 1,3-butanediol; 2,3-butanediol; 1,6-hexanediol; 1,5-pentanediol; 2,2-dimethyl-1,3-propanediol (neopentylglycol); 1,4-dihydroxycyclohexane; 1,4-dimethylcyclohexane; 1,8-octanediol; 1,10-decanediol; 1,12-decanediol; 2,2,4- and/or 2,4,4-trimethyl-1,3-pentanediol; and, mixtures thereof.

Other useful polyester diols are those obtainable from diol initiated polymerization of hydroxycarboxylic acids containing from 2 to 12 carbon atoms or a lactone thereof. The hydroxycarboxylic acids may be saturated or unsaturated, linear or branched, of which example include: glycolic acid; lactic acid; 5-hydroxy valeric acid; 6-hydroxy caproic acid; ricinoleic acid; 12-hydroxy stearic acid; 12-hydroxydodecanoic acid; 5-hydroxydodecanoic acid; 5-hydroxydecanoic acid; and. 4-hydroxydecanoic acid. Examples of suitable lactones are β-propiolactone, δ-valerolactone, (C₁-C₆)alkyl-valerolactone, ε-caprolactone and (C₁-C₆)alkyl-ε-caprolactone.

### Additives and Adjunct Ingredients

Said compositions obtained in the present invention will typically further comprise adjuvants and additives that can impart improved properties to these compositions. For instance, the adjuvants and additives may impart one or more of: improved elastic properties; improved elastic recovery; improved impact resistance; faster curing time; and, lower residual tack. Included among such adjuvants and additives - which independently of one another may be included in single components or both components of a two component (2K) composition - are: cure accelerators; chain transfer reagents; plasticizers; stabilizers including UV stabilizers; antioxidants; waxes; lubricants and boundary lubrication additives, such as random alkylene oxide copolymers and fatty acid (C₁₀-C₁₈) diethanolamide condensates; tackifiers; tougheners; fillers; drying agents; adhesion promoters; fungicides; flame retardants; rheological adjuvants; color pastes or color pigments, such as titanium dioxide, iron oxides or carbon black; solvents; and / or, non-reactive diluents.

For completeness, it is noted that in general adjunct materials and additives which contain functional groups which are reactive towards ethylenically unsaturated groups will be blended into the second component of the two component (2K) composition. Materials that contain groups which are reactive with the thermal initiator(s) are generally formulated into the first component of the two component (2K) composition. Unreactive materials may be formulated into either or both of the first and second components.

The term *"cure accelerator"* is intended herein to encompass any material which is a cure accelerator (or curing agent) for the (meth)acrylate functional compounds disclosed herein and, if applicable, for other ethylenically unsaturated monomers present in the composition. The cure accelerator may be of either the catalytic or reactive type. The present composition may comprise from 0 to 1 wt.%, for example from 0.01 to 0.5 wt.% of cure accelerator, based on the total weight of the composition.

Without intention to limit the present invention, accelerators which may find utility herein, either alone or in combination, include: saccharin; toluidines, such as N,N-diethyl-p-toluidine (DE-p-T) and N,N-dimethyl-o-toluidine (DM-o-T); acetyl phenylhydrazine (APH); 3-carboxyacryloyl phenylhydrazine (CAPH); methyl-3-carboxyacryloyl phenylhydrazine (MCAPH); 3-carboxypropanoyl phenylhydrazine (CPPH); methylene-3-carboxypropanoyl phenylhydrazine (MCPPH); phenyl glycines and derivatives thereof, as disclosed in US Patent No. 6,897,277 (Klemarczyk); maleic acid; quinones, such as naphthaquinone and anthraquinone; thiocaprolactam; thioureas, in particular alkyl thioureas; and, sulfonimide and sulfonamides, as disclosed in US Patent No. 6,958,368 (Klemarczyk).

Further instructive references on suitable cure accelerators include: US Patent No. 3,218,305 (Krieble); US Patent No. 4,180,640 (Melody); US Patent No. 4,287,330 (Rich); US Patent No. 4,321,349 (Rich); US Patent No. 3,970,505 (Hauser); and, US Patent No. 6,835,762 (Klemarczyk).

Aside from initiators, it is considered that the present composition may comprise a chain transfer agent which acts to transfer free radicals and which reduce the molecular weight of the obtained polymer and / or control chain growth in the polymerization. In an embodiment of the composition, a chain transfer agent may constitute from 0 to 1 wt.%, based on the total weight of polymerizable monomers in the composition.

*A "plasticizer"* for the purposes of this invention is a substance that decreases the viscosity of the composition and thus facilitates its processability. Herein the plasticizer may constitute up to 10 wt.% or up to 5 wt.%, based on the total weight of the composition, and is preferably selected from the group consisting of: polydimethylsiloxanes (PDMS); diurethanes; ethers of monofunctional, linear or branched C4-C16 alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; epoxidized plasticizers; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential. It is preferred that the plasticizer comprises or consists of one or more benzoic acid ester.

*"Stabilizers"* for purposes of this invention are to be understood as antioxidants, UV stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

Waxes represent an optional component of the present composition and may constitute from 0 to 5 wt.% or from 0 to 2 wt.%, based on the total weight of the composition. Without intention to limit the present invention, waxes having utility in the present invention should have a softening point of from 50 to 150°C and may include one or more of: polyethylene having a number average molecular weight (Mn) from 500 to 7500; petroleum waxes, such as paraffin wax and microcrystalline wax; synthetic waxes made by polymerizing carbon monoxide and hydrogen, such as Fischer-Tropsch wax; polyolefin waxes including functionalized polyolefin waxes of which maleated polyethylene, maleated polypropylene and maleated poly(ethylene-co-propylene) may be mentioned as examples; and, hydrogenated animal, fish or vegetable oils.

The present composition may optionally comprise one or more tackifiers which may be determinative of the contact-ability, bonding range, bond strength, heat resistance and specific adhesion of the cured composition. When present, the total amount of tackifier should be up to 10 wt.%, for example up to 5 wt.%, based on the total weight of the composition. Without intention to limit the present disclosure, exemplary tackifiers, which may be used alone or in combination, include: rosin acids; rosin esters; terpene phenolic resins; hydrocarbon resins; and, cumarone indene resins.

The compositions of the present invention may optionally contain a toughening rubber in the form of core-shell particles which are intended to become dispersed in the matrix obtained upon curing. The term *"core shell rubber"* or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0°C and preferably a glass transition temperature (T_{g}) of -20°C or lower, more preferably -40°C or lower and even more preferably -60°C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have an average particle size (d50) of from 10nm to 300nm, for example from 50 nm to 200 nm: said particle size refers to the diameter or largest dimension of a particle in a distribution of particles and is measured via dynamic light scattering.

The present application does not preclude the presence of two types of core shell rubber (CSR) particles with different particle sizes in the composition to provide a balance of key properties of the resultant cured product, including shear strength, peel strength and resin fracture toughness. In this embodiment, smaller included particles (1^{st} CSR type) may have an average particle size of from 10 to 100 nm and larger included particles (2^{nd} CSR type) may have an average particle size of from 120 nm to 300 nm, for example from 150 to 300 nm. The smaller core shell rubber particles should typically be employed in excess of the larger particles on a weight basis: a weight ratio of smaller CSR particles to larger CSR particles of from 3:1 to 5:1 may be employed for instance.

The core-shell rubber may be selected from commercially available products, examples of which include: Paraloid EXL 2650A, EXL 2655 and EXL2691 A, available from The Dow Chemical Company; Blendex particles, such as Blendex 338, available from Galata Chemicals; the Kane Ace^{®} MX series available from Kaneka Corporation, and in particular MX 120, MX 125, MX 130, MX 136, MX 551, MX553; and, METABLEN SX-006 available from Mitsubishi Rayon.

The core shell rubber particles should be included in the composition in an amount of from 0 to 10 wt.%, for example from 1 to 5 wt.% based on the total weight of the composition.

As noted, the compositions according to the present invention can additionally contain fillers. Suitable here are, for example, chalk, lime powder, precipitated and/or pyrogenic silicic acid, zeolites, bentonites, magnesium carbonate, diatomite, alumina, clay, talc, titanium oxide, iron oxide, zinc oxide, sand, quartz, flint, mica, glass powder, and other ground mineral substances. Organic fillers can also be used, in particular carbon black, graphite, wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added. Aluminum powder is likewise suitable as a filler.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Fillers which impart thixotropy to the composition may be preferred for many applications: such fillers are also described as rheological adjuvants, e.g. hydrogenated castor oil, fatty acid amides, or swellable plastics such as PVC.

The total amount of fillers present in the compositions of the present invention will preferably be from 0 to 30 wt.%, and more preferably from 0 to 20 wt.%, based on the total weight of the composition. The desired viscosity of the curable composition will typically be determinative of the total amount of filler added and it is submitted that in order to be readily extrudable out of a suitable dispensing apparatus - such as a tube - the curable compositions should possess a viscosity of from 3000 to 150,000, preferably from 40,000 to 80,000 mPas, or even from 50,000 to 60,000 mPas.

It is noted that compounds having metal chelating properties may be used in the compositions of the present invention to help enhance the adhesion of the cured composition to a substrate surface. Further, also suitable for use as adhesion promoters are the acetoacetate-functionalized modifying resins sold by King Industries under the trade name K-FLEX XM-B301.

In order to enhance shelf life even further, it is often advisable to further stabilize the compositions of the present invention with respect to moisture penetration through using drying agents. A need also occasionally exists to lower the viscosity of a composition according to the present invention for specific applications, by using reactive diluent(s). The total amount of reactive diluents present will typically be up to 10 wt.%, and preferably from 1 to 5 wt.%, based on the total weight of the composition.

The presence of solvents and non-reactive diluents in the compositions of the present invention is also not precluded where this can usefully moderate the viscosities thereof. For instance, but for illustration only, the compositions may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and sulfonamides.

The above aside, it is preferred that said solvents and non-reactive diluents constitute *in toto* less than 10 wt.%, in particular less than 5 wt.% or less than 2 wt.%, based on the total weight of the composition.

### METHODS AND APPLICATIONS

For the two component (2K) curable compositions, the reactive components are brought together and mixed in such a manner as to induce the hardening thereof: the reactive compounds should be mixed under sufficient shear force to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale liner applications in which volumes of less than 2 liters will generally be used, the preferred packaging for the two component (2K) compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger volume applications, the two components of the composition may advantageously be stored in drums or pails: in this case the two components are extruded via hydraulic presses, in particular by way of follower plates, and are supplied via pipelines to a mixing apparatus which can ensure fine and highly homogeneous mixing of the hardener and binder components. In any event, for any package it is important that the binder component be disposed with an airtight and moisture-tight seal, so that both components can be stored for a long time, ideally for 12 months or longer.

Non-limiting examples of two component dispensing apparatuses and methods that may be suitable for the present invention include those described in U.S. Patent No. 6,129,244 and US Patent No. 8,313,006.

The two (2K) component curable compositions should broadly be formulated to exhibit an initial viscosity - determined immediately after mixing, for example, up to two minutes after mixing - of less than 200000 mPa·s, for instance less than 100000 mPa.s, at 25°C. Independently of or additional to said viscosity characteristics, the two (2K) component composition should be formulated to be bubble (foam) free upon mixing and subsequent curing.

The curing of the compositions of the invention can occur at temperatures in the range of from 10°C to 180°C, preferably from 15°C to 150°C, and in particular from 20°C to 120°C: these ranges thereby include room temperature which can, in certain circumstances, be a desirable curing temperature. The temperature that is suitable depends on the specific compounds present and the desired curing rate and can be determined in the individual case by the skilled artisan, using simple preliminary tests if necessary. Where applicable, the temperature of the mixture formed from the respective components of a two (2K) component composition may be raised above the mixing temperature and / or the application temperature using conventional means including microwave induction.

For completeness, exemplary substrates to which the curable compositions of the present invention may be applied include: non-ferrous metallic substrates, such as aluminium, zinc and alloys thereof; ferrous metals, including iron, stainless steel, cold-rolled steel and electro-galvanized steel; engineered plastics; thermoplastic materials such as polyolefins, of which polyethylene (PE) and polypropylene (PP) may be mentioned, polybutylene terephthalate (PBT), polycarbonate (PC) and acrylonitrile butadiene styrene (ABS); paper; cardboard; glass; composites; wood; leather; textiles; and, combinations thereof.

It is envisaged that the compositions of the present disclosure may have utility as coatings, adhesives and sealants. By virtue of the fact that the compositions of the present invention are capable of creating a high bonding strength in a short time, often at room temperature, the compositions are optimally used for forming composite structures by surface-to-surface bonding of the same or different materials to one another. The binding together of metallic materials may be mentioned as an exemplary adhesive application of the present compositions.

It is considered, in particular, that the compositions of the present disclosure are suitable as adhesives for electrical components such as circuit boards, cables, fiber optics, cover strips, plugs, batteries, capacitors, sensors, connectors, circuit breakers, fuses, relays, switches and wires. The adhesives may serve to protect an assembly of such electrical components against the ingress of water and other contaminants, against heat exposure, temperature fluctuation and thermal shock, and against mechanical damage.

In each of the above described applications, the compositions may applied by conventional application methods such as: brushing; roll coating; doctor-blade application; dispensing as beads or dots through a nozzle using *inter alia* handguns, automated pneumatic guns or automated electric guns; jetting; printing methods; and, spraying methods, including but not limited to air-atomized spray, air-assisted spray, airless spray and high-volume low-pressure spray. For coating and adhesive applications, it is recommended that the compositions be applied to a wet film thickness of from 10 to 500 µm. The application of thinner layers within this range is more economical and provides for a reduced likelihood of thick cured regions that may - for coating applications - require further processing such as sanding. However, great control must be exercised in applying thinner coatings or layers so as to avoid the formation of discontinuous cured films.

Various features and embodiments of the disclosure are described in the following examples, which are intended to be representative and not limiting.

### EXAMPLES

The following commercial products were used in the Examples:

| | |
|---|---|
| MMA: | Methyl methacrylate, available from Sigma Aldrich. |
| MAA: | Methacrylic acid, available from Sigma Aldrich. |
| Sartomer 203: | Methacrylic acid tetrahydrofurfuryl ester (tetrahydrofurfuryl methacrylate), available from Arkema. |
| Blendex 338: | Core-shell particles available from Galata Chemicals. |
| DE-p-T: | Diethanol para-toluidine, cure accelerator available from BASF. |
| BHT: | 2,6-di-tert-butyl-4-methylphenol, antioxidant available from Sigma Aldrich. |
| Hacryl: | Bis[2-(methacryloxy)ethyl]phosphate, available from Harcros Chemicals Inc. |
| Hypro^{®} 2000X168LC VTB: | Methacrylate terminated polybutadiene rubber, available from Huntsman. |
| Kraton D1155 ES: | Styrene-butadiene block copolymer available from Kraton Polymers. |
| PPh₃: | Triphenylphosphane, available from Sigma Aldrich. |
| PE Wax | Polyethylene Wax (CAS No. 9002-88-4). |
| Velvetol H2700: | Polytrimethylene ether glycol, available from Weylchem (100% bio-based carbon; weight average molecular weight of 2600-2800; hydroxyl number 43.2-40.1 mg KOH/g. |
| Pearlbond^{™} 106, | Thermoplastic polyurethane, available from Lubrizol. |
| Benzoflex 2088: | Blend of diethylene glycol benzoate, dipropylene glycol benzoate and triethylene glycol benzoate available from Eastman. |
| Pluracol V10 TMP: | Ethylene oxide-propylene oxide copolymer ether with trimethylolpropane (CAS No. 52624-57-4) available from BASF. |
| Kalix^{®} HPPA: | Polyamide for structural components used in smart mobile electronic devices, available from Solvay. |

Bio-TPU Synthesis: A four-necked flat flange vessel was charged with 245.05 g of Velvetol H2700 and then dried for 1 hour at 80°C under high vacuum while stirring at 100 rpm. After that, the vessel is flushed with nitrogen and 12.07 g of 1,4-butanediol was added. The mixture was then stirred for an additional 20 minutes before adding 54.98 g of 4,4'-MDI. The stirring speed was then increased to 250 rpm and the mixture was heated to 140° C and maintained at that temperature for one hour. In addition, a vacuum was applied for the last 15 minutes. Finally, the reaction mixture is bottled (Yield = 293 g).

The NCO value of the polyurethane was determined as 0.05% by titration according to DIN EN ISO 14896, based upon the reaction of residual isocyanate groups with an excess of di-n-butylamine in toluene to form a urea; unreacted (excess) amine is determined by back titration with hydrochloric acid.

### Example 1 and Reference Example 1

The first component of the compositions of these Examples is given in Table 1 herein below. The given weight percentages in Table 1 are based on the total weight of that first component.

**Table 1**

| Constituent | Reference Example 1 (wt.%) | Example 1 (wt.%) |
|---|---|---|
| MMA | 59.1 | 59.1 |
| MAA | 14.8 | 14.8 |
| Fossil Pearlbond 106 | 24.6 | |
| Bio-TPU | | 24.6 |
| Amine Curative TDEA | 1.5 | 1.5 |

To prepare the first component of Example 1 and Reference Example 1, the liquid monomers were first combined together with the amine curative. The respective thermoplastic urethane tougheners were initially provided as solids. These solids were first cut into 10 mm cubes and then added to the liquid mixture at room temperature under low shear (300 rpm). After this addition, the mixture formed was heated up to 40°C and the shear rate then increased to 1300 rpm. This high shear rate was maintained until all the material had dissolved. Once dissolved, the formed first component was cooled.

The composition of the second component was identical for both Example 1 and Reference Example 1 and is provided in Table 2 herein below, that second component being prepared by simple mixing of the listed constituents. The given weight percentages in Table 2 are based on the total weight of that second component.

**Table 2**

| Constituent | Percentage by Weight of 2^{nd} Component (wt.%) |
|---|---|
| Benzoyl Peroxide (75 wt.% dispersion in water) | 37.0 |
| Bisphenol A Epoxy resin | 21.0 |
| PE Wax | 11.5 |
| Benzoflex 2088 | 20.5 |
| Pluracol V10 TMP | 10.0 |

In forming the curable compositions for Example 1 and Reference Example 1, the two components are combined at a ratio by weight 1^{st} Component: 2^{nd} Component of 10:1. The following test was then performed.

T-Peel Resistance (N/mm): The testing of this parameter was based on the following standards: ASTM D1876 Peel *Resistance* of Adhesives ; ISO 11339 Adhesives *180° Peel Test for Flexible-to-Flexible Bonded* Assemblies ; DIN 53282 *Testing of Adhesives for Metals and Adhesively Bonded Metal Joints.* At least three test specimens were assembled and tested for each test point. Bonds are prepared using Mild Steel (MS) steel peel coupons which had been wiped with isopropyl alcohol (IPA) to remove dirt or grease therefrom. The composition to be evaluated was applied to the prepared side of one of the peel strip specimens. Starting at one end, the composition was spread with an applicator stick to ensure coverage of a 25.5 by 300 mm area. A second peel strip specimen was then mated with the coated peel strip specimen, with the prepared side of the mating peel strip specimen contacting the composition. Rigid glass plates were then placed over the sheeting and the obtained assembly was clamped using four equally spaced clamps on each side of the assembly - for a total of eight clamps - to ensure that the clamping load was evenly distributed. The composition was then cured within the assembly at 80 °C for 20 minutes. The clamps were removed after 24 hours (*T=0*) and then at 1 month intervals (*T=1 month etc.*) thereafter and the bonds were pulled to provide T-peel results.

The results of the aforementioned test as performed on Example 1 and Reference Example 1 are shown in Table 3 hereinbelow.

**Table 3**

| Time (Months) | T-Peel Strength (N/mm) | |
|---|---|---|
| | Reference Example 1 | Example 1 |
| 0 | 14.87 ±0.81 | 9.55 ±0.95 |
| 1 | 14.95 ±0.55 | 9.03 ±1.67 |
| 2 | 12.93 ±0.57 | 9.37 ±0.65 |
| 3 | 4.53 ±0.66 | 9.71 ±0.32 |
| 4 | 0.73 ±0.14 | 9.16 ±1.0 |
| 5 | 0.55 ±0.09 | 8.49 ±0.8 |
| 6 | 0.71 ±0.02 | 8.97 ±0.38 |

The results of Table 3 indicate that, for the composition in accordance with the invention, the T-peel strength is retained over time.

### Example 2

The first component of the composition of Example 2 is given in Table 4 herein below. The given weight percentages in Table 4 are based on the total weight of that first component.

**Table 4**

| Constituent | Example 2 (wt.%) |
|---|---|
| 4,5-dihydro-5-methyl-3-methylene-2(3H)-furanone | 24.3 |
| Tetrahydrofurfuryl methacrylate | 15.9 |
| MAA | 11.8 |
| Hypro^{®} 2000X168LC VTB | 15.0 |
| Bio-TPU | 25.0 |
| DE-p-T | 1.5 |
| BHT | 0.3 |
| Hacryl | 1.1 |
| PPh₃ | 0.6 |

The composition of the second component is provided in Table 5 herein below, that second component being prepared by simple mixing of the listed constituents. The given weight percentages in Table 5 are based on the total weight of that second component.

**Table 5**

| Constituent | Percentage by Weight of 2^{nd} Component (wt.%) |
|---|---|
| Benzoyl Peroxide (75 wt.% dispersion in water) | 37.0 |
| Bisphenol A Epoxy resin | 21.0 |
| PE Wax | 11.5 |
| Benzoflex 2088 | 20.5 |
| Pluracol V10 TMP | 10.0 |

In forming the curable compositions for Example 2, the two components are combined at a ratio by weight 1^{st} Component: 2^{nd} Component of 10:1.

The following test methods were then used to characterize the two-component formulation:
Tensile Lap Shear (TLS) Test: The substrates tested were stainless steel (1.4301) and Kalix^{®} HPPA, each substrate having a thickness of 0.1 inch. The substrate was cut into 2.5 cm x 10 cm (1" x 4") in size for tensile testing. Tensile lap shear (TLS) test was performed at room temperature based upon ASTM D1002 Standard Test Method for Determining Lap Shear Strength of Adhesively Bonded Metal Specimens. The bond overlapping area for each stated substrate was 2.5 cm x 1.3 cm (1" x 1") with a bond thickness of 0.1 cm (40 mil). The applied two-component (2K) adhesive compositions were cured in the overlapping region at 80°C for 20 minutes. The test specimens are placed in the grips of a universal testing machine and pulled at 10 mm/min until failure occurs. The grips used to secure the ends of the assembly must align so that the applied force is applied through the centerline of the specimen. The type of failure can be either adhesive - wherein the adhesive separates from one of the substrates - or cohesive wherein the adhesive ruptures within itself.

T-Peel Resistance (N/mm): The testing of this parameter was based on the following standards: ASTM D1876 Peel *Resistance* of Adhesives ; ISO 11339 Adhesives *180° Peel Test for Flexible-to-Flexible Bonded* Assemblies ; DIN 53282 *Testing* of *Adhesives for Metals and Adhesively Bonded Metal Joints.* At least three test specimens were assembled and tested for each test point. Bonds are prepared using Mild Steel (MS) steel peel coupons which had been wiped with isopropyl alcohol (IPA) to remove dirt or grease therefrom. The composition to be evaluated was applied to the prepared side of one of the peel strip specimens. Starting at one end, the composition was spread with an applicator stick to ensure coverage of a 25.5 by 300 mm area. A second peel strip specimen was then mated with the coated peel strip specimen, with the prepared side of the mating peel strip specimen contacting the composition. Rigid glass plates were then placed over the sheeting and the obtained assembly was clamped using four equally spaced clamps on each side of the assembly - for a total of eight clamps - to ensure that the clamping load was evenly distributed. The composition was then cured within the assembly at 80 °C for 20 minutes. The clamps were removed after 24 hours and the bonds were pulled to provide T-peel results.

Impact Strength (N/mm): The testing of this parameter was based on the following standards: DIN *50115 Notched bar impact testing of metallic materials;* and, ISO 14556 Metallic Materials - *Charpy V-notch pendulum impact test - Instrumented Test Method.* According to these standards, a pendulum impact tester was used, said tester being equipped with a retaining bolt, active strain gauges and hammer fin and further equipped with instrumentation for determining force-time curves and force-deflection curves. The specimen was inserted into a wedge test fixture with the unbonded ends protruding enough to interleave the spacer. The test fixture was then assembled into the specimen retaining bolt, which bolt was first tightened by hand then tightened an additional quarter turn using an appropriate tool. The specimen was then allowed to stabilize at room temperature before applying the impact, for which an impact velocity of 3 ms⁻¹ was specified. During the impact event, the transducer signal was automatically and unselectively detected by microprocessor and recorded; the force-time (or force-displacement) data was subsequently manipulated separately.

Glass Transition Temperature (Tg, °C): The glass transition temperature is the onset temperature at which the cured resin changes from a glassy (solid) state to a soft, rubbery state: it can be considered the point at which a measurable reduction in physical properties occurs resulting from exposure to elevated temperatures. Herein the glass transition temperature is determined by dynamic mechanical thermal analysis (DMTA) using a TA Instruments Q800 DMA. Cured samples of the compositions - having dimensions of length 15.0 mm, width 5.0 mm and thickness 0.25 mm - were evaluated at a temperature range between -20 °C and 200 °C at a heating rate of 2 K/min. A oscillatory force having a frequency of 1 Hz was applied at a controlled strain (0.1%) to yield measures of stiffness and damping, reported as storage modulus (E') and tan delta (tan δ). The glass transition (Tg) is observed as a large drop in the storage modulus (E') when viewed on a log scale against a linear temperature scale: a concurrent peak in the tan delta (tan δ) is also seen.

Storage Modulus (MPa): This parameter is measured at a stated temperature by dynamic mechanical thermal analysis (DMTA) using a TA Instruments Q800 DMA as described above.

The results of the aforementioned tests as performed on Example 2 are shown in Table 6 hereinbelow.

**Table 6**

| Tested Parameter | Example 2 |
|---|---|
| Lap Shear Strength, Steel (MPa) | 15.8 |
| Lap Shear Strength, Kalix (MPa) | 14.3 |
| Impact Strength (N/mm) | 19.6 |
| T-Peel Strength (N/mm) | 2.9 |
| Tg (°C) | 144 |
| Storage Modulus at 25°C (MPa) | 166.5 |
| Storage Modulus at 60°C (MPa) | 77.4 |
| Storage Modulus at 80°C (MPa) | 36.7 |
| Storage Modulus at 100°C (MPa) | 16.0 |
| Storage Modulus at 120°C (MPa) | 7.0 |

It is considered that the thermoplastic polyurethane of Example 2 may act to reduce the storage modulus at low temperatures. At temperatures above 80°C, however, the storage modulus of Example 2 is considered to be indicative of high rigidity and temperature stability.

## Claims

1. A two component composition comprising:
a first component comprising:
a) from 10 to 80 wt.% of at least one ethylenically unsaturated monomer, represented by Formula M:
H₂C=CQCO₂R¹ (M)
wherein: Q is hydrogen, halogen or a C₁ alkyl group; and,
R¹ is C₁-C₁₈ alkyl, C₁-C₁₈ hydroxyalkyl, C₃-C₁₈ cycloalkyl, C₃-C₅cycloalkylC₁-C₃alkyl, C₂-C₅heterocycloalkyl, C₂-C₅heterocycloalkylC₁-C₃alkyl, C₂-C₂₀ alkenyl, C₂-C₁₂ alkynyl, C₆-C₁₈ aryl, C₁-C₉ heteroaryl, C₁-C₉heteroarylC₁-C₃alkyl, C₇-C₁₈ alkaryl or C₇-C₁₈ aralkyl; preferably wherein: R¹ is C₁-C₁₂ alkyl, C₁-C₁₂ hydroxyalkyl, C₃-C₁₂ cycloalkyl, C₃-C₅cycloalkylC₁-C₃alkyl, C₂-C₅heterocycloalkyl or C₂-C₅heterocycloalkylC₁-C₃alkyl.
; and,
a second component comprising:
b) from 0.1 to 10 wt.% of at least one radical generating initiator,
wherein said composition further comprises
c) from 5 to 70 wt.% of at least one thermoplastic polyurethane obtained from the reaction of:
I) at least one polyether polyol having a weight average molecular weight of from 400 to 4000 g/mol., a polydispersity of less than 3 and a bio-based carbon content of at least 50%;
II) at least one polyol having a molecular weight of less than 500 g/mol;
III) optionally at least one further active hydrogen compound; and,
IV) at least one polyisocyanate compound,
wherein part a) of the first component comprises, based on the weight of the composition, from 2 to 50 wt.% at least one ethylenically unsaturated acid monomer. selected from the group consisting of: methacrylic acid; acrylic acid, itaconic acid; maleic acid; aconitic acid; crotonic acid; muconic acid; and, fumaric acid; mono-2-(methacryloyloxy)ethyl maleate; and, mono-2-methacryloyloxyethyl succinate,
wherein in said reaction the molar ratio of hydroxyl groups to NCO groups is at least 1:1 and preferably from 1:1 to 2:1, and
wherein the weight average molecular weight is determined with gel permeation chromatography (GPC) using polystyrene calibration standards, as is done according to ASTM 3536, and wherein the bio-based carbon content is determined in accordance with ASTM D6866 and is based on ¹⁴C radiocarbon analysis.

2. The two component composition according to claim 1 comprising:
at least one (meth)acrylate monomer represented by Formula (M) wherein R¹ is C₁-C₁₂ alkyl; and / or,
at least one (meth)acrylate monomer represented by Formula (M) wherein R¹ is C₂-C₅heterocycloalkylC₁-C₃alkyl.

3. The two component composition according to any one of claims 1 to 2 comprising a macro-monomer component consisting of one or more oligomers selected from the group consisting of: urethane (meth)acrylates, polyester (meth)acrylates; polyether (meth)acrylates; (meth)acrylate functionalized polymers and copolymers of dienes; and, (meth)acrylate functionalized hydrogenated polymers and copolymers of dienes.

4. The two component composition according to any one of claims 1 to 3, wherein part a) comprises, based on the weight of the composition, from 10 to 60 wt.% of at least one unsaturated lactone or lactam monomer.

5. The two component composition according to claim 4comprising at least one α-exomethylene lactone monomer selected from the group consisting of: α-methylene-γ-butyrolactone; β-hydroxy-α-methylene-γ-butyrolactone; β-methyl-α-methylene-γ-butyrolactone; and, γ-methyl-α-methylene-γ-butyrolactone.

6. The two component composition according to any one of claims 1 to 5, wherein part c) consists of at least one radical generating redox initiator.

7. The two component composition according to any one of claims 1 to 6, wherein said polyol (I) is a polyoxy(C₂-C₄)alkylene having a weight average molecular weight of from 400 to 4000 g/mol, a polydispersity of less than 3 and a bio-based carbon content of at least 50%.

8. The two component composition according to any one of claims 1 to 7, wherein said polyol (I) is a polytrimethylene ether glycol having a weight average molecular weight of from 400 to 4000 g/mol, a polydispersity of less than 3 and a bio-based carbon content of at least 90%.

9. The two component composition according to any one of claims 1 to 8 further comprising, based on the weight of the composition:
from 1 to 20 wt.% of d) core-shell rubber particles.

10. The two component composition according to any one of claims 1 to 9 further comprising, based on the weight of the composition:
from 0.01 to 5 wt.% of e) cure accelerator.

11. A cured product obtained from the two component composition as defined in any one of claims 1 to 10.

12. Use of the cured reaction product as defined in claim 11 as a coating, sealant or adhesive.

13. A bonded structure comprising
a first substrate; and,
a second substrate;
wherein a cured two component composition as defined in any one of claims 1 to 10 is disposed between the first and second substrates.

## Patentansprüche

1. Zweikomponentenzusammensetzung, umfassend:
eine erste Komponente, umfassend:
a) von 10 bis 80 Gew.-% von mindestens einem ethylenisch ungesättigten Monomer, dargestellt durch Formel M:
H₂C=CQCO₂R¹ (M)
wobei: Q Wasserstoff, Halogen oder eine C₁-Alkylgruppe ist; und
R¹ C₁-C ₁₈-Alkyl, C₁-C₁₈-Hydroxyalkyl, C₃-C₁₈-Cycloalkyl, C₃-C₅-CycloalkylC₁-C₃-Alkyl, C₂-C₅-Heterocycloalkyl, C₂-C₅-HeterocycloalkylC₁-C₃-Alkyl, C₂-C₂₀-Alkenyl, C₂-C₁₂-Alkinyl, C₆-C₁₈-Aryl, C₁-C₉-Heteroaryl, C₁-C₉-HeteroaryIC₁-C₃-Alkyl, C₇-C₁₈-Alkaryl oder C₇-C₁₈-Aralkyl ist; vorzugsweise wobei: R¹ C₁-C₁₂-Alkyl, C₁-C₁₂-Hydroxyalkyl, C₃-C₁₂-Cycloalkyl, C₃-C₅-CycloalkylC₁-C₃-Alkyl, C₂-C₅-Heterocycloalkyl oder C₂-C₅-HeterocycloalkylC₁-C₃-Alkyl.
; und
eine zweite Komponente, umfassend:
b) von 0,1 bis 10 Gew.-% mindestens eines radikalbildenden Initiators, wobei die Zusammensetzung ferner umfasst
c) von 5 bis 70 Gew.-% mindestens eines thermoplastischen Polyurethans, das erhalten wird, aus der Umsetzung von:
I) mindestens einem Polyetherpolyol, das ein gewichtsmittleres Molekulargewicht von 400 bis 4000 g/mol, eine Polydispersität von weniger als 3 und einen biobasierten Kohlenstoffgehalt von mindestens 50 % aufweist;
II) mindestens ein Polyol, das ein Molekulargewicht von weniger als 500 g/mol aufweist;
III) optional mindestens eine weitere aktive Wasserstoffverbindung; und
IV) mindestens eine Polyisocyanatverbindung,
wobei Teil a) der ersten Komponente, bezogen auf das Gewicht der Zusammensetzung, von 2 bis 50 Gew.-% mindestens eines ethylenisch ungesättigten Säuremonomers umfasst, ausgewählt aus der Gruppe bestehend aus: Methacrylsäure; Acrylsäure, Itaconsäure; Maleinsäure; Aconitsäure; Crotonsäure; Muconsäure; und Fumarsäure; Mono-2-(methacryloyloxy)ethylmaleat; und Mono-2-methacryloyloxyethylsuccinat,
wobei bei der Umsetzung das Molverhältnis von Hydroxylgruppen zu NCO-Gruppen mindestens 1:1 und vorzugsweise von 1:1 bis 2:1 beträgt und
wobei das gewichtsgemittelte Molekulargewicht mit Gelpermeationschromatographie (GPC) unter Verwendung von Polystyrol-Kalibrierungsstandards bestimmt wird, wie es gemäß ASTM 3536 geschieht, und wobei der biobasierte Kohlenstoffgehalt gemäß ASTM D6866 bestimmt wird und auf ¹⁴C-Radiokarbonanalyse basiert.

2. Zweikomponentenzusammensetzung nach Anspruch 1, umfassend:
mindestens ein (Meth)acrylatmonomer, dargestellt durch Formel (M), wobei R¹ C₁-C₁₂-Alkyl ist; und/oder
mindestens ein (Meth)acrylatmonomer, dargestellt durch Formel (M), wobei R¹ C₂-C₅-HeterocycloalkylC₁-C₃-Alkyl ist.

3. Zweikomponentenzusammensetzung nach einem der Ansprüche 1 bis 2, umfassend eine Makromonomerkomponente, die aus einem oder mehreren Oligomeren besteht, ausgewählt aus der Gruppe bestehend aus: Urethan(meth)acrylaten, Polyester(meth)acrylaten; Phenoxypropyl(meth)acrylat; (Meth)acrylat-funktionalisierten Polymeren und Copolymeren von Dienen; und (Meth)acrylat-funktionalisierten hydrierten Polymeren und Copolymeren von Dienen.

4. Zweikomponentenzusammensetzung nach einem der Ansprüche 1 bis 3, wobei Teil a), bezogen auf das Gewicht der Zusammensetzung, von 10 bis 60 Gew.-% mindestens eines ungesättigten Lacton- oder Lactammonomers umfasst.

5. Zweikomponentenzusammensetzung nach Anspruch 4, umfassend mindestens ein α-Exo-Methylenlactonmonomer, ausgewählt aus der Gruppe bestehend aus: α-Methylen-γ-butyrolacton; β-Hydroxy-α-methylen-γ-butyrolacton; β-Methyl-α-methylen-γ-butyrolacton; und γ-Methyl-α-methylen-γ-butyrolacton.

6. Zweikomponentenzusammensetzung nach einem der Ansprüche 1 bis 5, wobei Teil c) aus mindestens einem Radikale erzeugenden Redoxinitiator besteht.

7. Zweikomponentenzusammensetzung nach einem der Ansprüche 1 bis 6, wobei das Polyol (I) ein Polyoxy(C₂-C₄)Alkylen ist, das ein gewichtsmittleres Molekulargewicht von 400 bis 4000 g/mol, eine Polydispersität von weniger als 3 und einen biobasierten Kohlenstoffgehalt von mindestens 50 % aufweist.

8. Zweikomponentenzusammensetzung nach einem der Ansprüche 1 bis 7, wobei das Polyol (I) ein Polytrimethylenetherglykol ist, das ein gewichtsmittleren Molekulargewicht von 400 bis 4000 g/mol, eine Polydispersität von weniger als 3 und einen biobasierten Kohlenstoffgehalt von mindestens 90 % aufweist.

9. Zweikomponentenzusammensetzung nach einem der Ansprüche 1 bis 8, ferner umfassend, bezogen auf das Gewicht der Zusammensetzung:
von 1 bis 20 Gew.-% von d) Kern-Schale-Kautschukpartikel.

10. Zweikomponentenzusammensetzung nach einem der Ansprüche 1 bis 9, ferner umfassend, bezogen auf das Gewicht der Zusammensetzung,:
von 0,01 bis 5 Gew.-% e) eines Härtungsbeschleunigers.

11. Gehärtetes Produkt, das aus der Zweikomponentenzusammensetzung, wie in einem der Ansprüche 1 bis 10 definiert, erhalten wird.

12. Verwendung des gehärteten Umsetzungsprodukts, wie in Anspruch 11 definiert, als eine Beschichtung, ein Dichtungsmaterial oder einen Klebstoff.

13. Gebundene Struktur, umfassend
ein erstes Substrat; und
ein zweites Substrat;
wobei eine gehärtete Zweikomponentenzusammensetzung, wie in einem der Ansprüche 1 bis 10 definiert, zwischen dem ersten und dem zweiten Substrat angeordnet ist.

## Revendications

1. Composition à deux composants comprenant :
un premier composant comprenant :
a) de 10 à 80 % en poids d'au moins un monomère à insaturation éthylénique, représenté par la Formule M :
H₂C=CQCO₂R¹ (M)
dans laquelle : Q est hydrogène, halogène ou un groupe alkyle en C₁ ; et,
R¹ est alkyle en C₁-C₁₈, hydroxyalkyle en C₁-C₁₈, cycloalkyle en C₃-C₁₈, cycloalkyl en C₃-C₅-alkyle en C₁-C₃, hétérocycloalkyle en C₂-C₅, hétérocycloalkyl en C₂-C₅-alkyle en C₁-C₃, alcényle en C₂-C₂₀, alcynyle en C₂-C₁₂, aryle en C₈-C₁₈, hétéroaryle en C₁-C₉, hétéroaryl en C₁-C₉-alkyle en C₁-C₃, alcaryle en C₇-C₁₈ ou aralkyle en C₇-C₁₈ ; de préférence dans laquelle : R¹ est alkyle en C₁-C₁₂, hydroxyalkyle en C₁-C₁₂, cycloalkyle en C₃-C₁₂, cycloalkyl en C₃-C₅-alkyle en C₁-C₃, hétérocycloalkyle en C₂-C₅ ou hétérocycloalkyl en C₂-C₅-alkyle en C₁-C₃.
; et,
un second composant comprenant :
b) de 0,1 à 10 % en poids d'au moins un initiateur générant des radicaux, dans laquelle ladite composition comprend en outre
c) de 5 à 70 % en poids d'au moins un polyuréthane thermoplastique obtenu par la réaction de :
I) au moins un polyol de polyéther ayant une masse moléculaire moyenne en poids allant de 400 à 4 000 g/mol, une polydispersité inférieure à 3 et une teneur en carbone biosourcé d'au moins 50 % ;
II) au moins un polyol ayant une masse moléculaire inférieure à 500 g/mol ;
III) facultativement au moins un autre composé d'hydrogène actif ; et,
IV) au moins un composé polyisocyanate,
dans laquelle la partie a) du premier composant comprend, sur la base du poids de la composition, de 2 à 50 % en poids d'au moins un monomère acide à insaturation éthylénique, choisi dans le groupe constitué de : acide méthacrylique ; acide acrylique, acide itaconique ; acide maléique ; acide aconitique ; acide crotonique ; acide muconique ; et acide fumarique ; maléate de mono-2-(méthacryloyloxy)éthyle ; et succinate de mono-2-méthacryloyloxyéthyle,
dans laquelle, dans ladite réaction, le rapport molaire entre groupes hydroxyles et groupes NCO est d'au moins 1:1 et, de préférence, va de 1:1 à 2:1, et
dans laquelle la masse moléculaire moyenne en poids est déterminée par chromatographie par perméation de gel (GPC) à l'aide de témoins d'étalonnage de polystyrène, conformément à la norme ASTM 3536, et dans laquelle la teneur en carbone biosourcé est déterminée conformément à la norme ASTM D6866 et est basée sur une analyse de radiocarbone ¹⁴C.

2. Composition à deux composants selon la revendication 1, comprenant :
au moins un monomère (méth)acrylate représenté par la Formule (M) dans laquelle R¹ est alkyle en C₁-C₁₂ ; et/ou,
au moins un monomère (méth)acrylate représenté par la Formule (M) dans laquelle R¹ est hétérocycloalkyl en C₂-C₅-alkyle en C₁-C₃.

3. Composition à deux composants selon l'une quelconque des revendications 1 à 2, comprenant un composant macro-monomère constitué d'un ou plusieurs oligomères choisis dans le groupe constitué de : (méth)acrylates d'uréthane, (méth)acrylates de polyester ; (méth)acrylates de polyéther ; polymères et copolymères de diènes fonctionnalisés par (méth)acrylate ; et polymères hydrogénés et copolymères de diènes hydrogénés, fonctionnalisés par (méth)acrylate.

4. Composition à deux composants selon l'une quelconque des revendications 1 à 3, dans laquelle la partie a) comprend, sur la base du poids de la composition, de 10 à 60 % en poids d'au moins un monomère lactone ou lactame insaturé.

5. Composition à deux composants selon la revendication 4, comprenant au moins un monomère α-exo-méthylène lactone choisi dans le groupe constitué de : α-méthylène-γ-butyrolactone ; β-hydroxy-α-méthylène-γ-butyrolactone ; β-méthyl-α-méthylène-γ-butyrolactone ; et γ-méthyl-α-méthylène-γ-butyrolactone.

6. Composition à deux composants selon l'une quelconque des revendications 1 à 5, dans laquelle la partie c) est constituée d'au moins un initiateur redox générant des radicaux.

7. Composition à deux composants selon l'une quelconque des revendications 1 à 6, dans laquelle ledit polyol (1) est un polyoxyalkylène en (C₂-C₄) ayant une masse moléculaire moyenne en poids allant de 400 à 4 000 g/mol, une polydispersité inférieure à 3 et une teneur en carbone biosourcé d'au moins 50 %.

8. Composition à deux composants selon l'une quelconque des revendications 1 à 7, dans laquelle ledit polyol (1) est un polytriméthylène éther glycol ayant une masse moléculaire moyenne en poids allant de 400 à 4 000 g/mol, une polydispersité inférieure à 3 et une teneur en carbone biosourcé d'au moins 90 %.

9. Composition à deux composants selon l'une quelconque des revendications 1 à 8, comprenant en outre, sur la base du poids de la composition :
de 1 à 20 % en poids de d) des particules de caoutchouc cœur-écorce.

10. Composition à deux composants selon l'une quelconque des revendications 1 à 9, comprenant en outre, sur la base du poids de la composition :
de 0,01 à 5 % en poids de e) un accélérateur de durcissement.

11. Produit durci obtenu à partir de la composition à deux composants telle que définie dans l'une quelconque des revendications 1 à 10.

12. Utilisation du produit de réaction durci selon la revendication 11 en tant que revêtement, agent de scellement ou adhésif.

13. Structure collée, comprenant
un premier substrat ; et,
un second substrat ;
dans laquelle une composition à deux composants durcie telle que définie dans l'une quelconque des revendications 1 à 10 est disposée entre les premier et second substrats.
